# EUROPÄISCHE PATENTSCHRIFT

(11) **EP 3 402 944 B1**
(45) Veröffentlichungstag und Bekanntmachung des Hinweises auf die Patenterteilung: **09.08.2023**
(21) Anmeldenummer: 16829247.2
(22) Anmeldetag: 27.12.2016
(51) Int. Cl.: E04F 21/18, F16B 7/14, E04G 1/18, F16B 7/16

(54) **STÜTZE**
SUPPORT
ÉTANÇON

(30) Priorität: 13.01.2016 DE 102016100487
(43) Veröffentlichungstag der Anmeldung: 21.11.2018
(73) Patentinhaber: BESSEY Tool GmbH & Co. KG, 74321 Bietigheim-Bissingen (DE)
(72) Erfinder: KLÖPFER, Gerhard, 74385 Pleidelsheim (DE); KLEIN, Thomas, 74354 Besigheim (DE)
(74) Vertreter: Hoeger, Stellrecht & Partner Patentanwälte mbB
(86) Internationale Anmeldenummer: PCT/EP2016/082700
(87) Internationale Veröffentlichungsnummer: WO 2017/121614

(56) Entgegenhaltungen:
- WO-A1-97/36069
- DE-A1- 19 749 477
- DE-C1- 19 805 474
- DE-U1- 29 601 103
- DE-U1-202012 002 195
- US-A1- 2012 034 023

## Beschreibung

Die Erfindung betrifft eine Stütze, umfassend einen ersten Stab, ein erstes Anlageelement, welches an dem ersten Stab über ein erstes Gewinde mit einem ersten Gewindesinn gehalten ist, einen zweiten Stab, ein zweites Anlageelement, welches an dem zweiten Stab über ein zweites Gewinde mit einem zweiten Gewindesinn gehalten ist, wobei der erste Gewindesinn entgegengesetzt zu dem zweiten Gewindesinn ist, und eine Führungseinrichtung, durch welche der erste Stab verschieblich an dem zweiten Stab geführt ist.

Die DE 198 05 474 C1 offenbart eine Teleskopstütze, bestehend aus einer in wenigstens einem Teleskoprohr teleskopierenden Teleskopstange und einem handbestätigten Vorschubmittel zum stufenweisen Ausfahren der Teleskopstange aus dem Teleskoprohr, wobei das Vorschubmittel einen Handgriff mit einem an der Teleskopstange schwenkbar gelagerten Kraftübertragungsblock umfasst und der Kraftübertragungsblock bei einer Betätigung des Handgriffs kraftübertragend in den Antrieb des Vorschubmittels eingreift.

Die WO 97/36069 A1 offenbart eine Haltevorrichtung, bestehend aus wenigstens zwei teleskopierenden Rohren oder einer in wenigstens einem Rohr teleskopierenden Stange, wobei ein erstes Rohr oder die Stange im Verhältnis zum zweiten Rohr um einen ersten Weg verschiebbar ist und Mittel vorhanden sind, das erste Rohr oder die Stange im Verhältnis zum zweiten Rohr um einen weiteren Weg zu transportieren, und wobei weitere Arretiermittel für die Rohre bzw. das Rohr und die Stange gegeneinander und Endanschläge an den Rohren bzw. der Stange vorhanden sind.

Unter der Bezeichnung "Lastenstange" vertreibt die Firma PIHER INDUSTRIAS PIQUERAS, S.A., Pol. Cantabria 1, C/Pescadores. 6, 26009 Logrono, Spanien, www.piher.com eine Stütze.

In dem Katalog "PIHER, www.piher.com, Katalog 2014" ist auf den Seiten 5 bis 9 eine Lastenstange gezeigt.

Aus der EP 0 888 485 B1 ist eine Haltevorrichtung für Gegenstände wie Deckenplatten, Dachlatten, Maschinenteile oder dergleichen bekannt, bestehend aus wenigstens zwei teleskopierenden Rohren oder einer in wenigstens einem Rohr teleskopierenden Stange, wobei ein erstes Rohr oder die Stange im Verhältnis zum zweiten Rohr verschiebbar sind, und wobei Arretiermittel für die Rohre bzw. das Rohr und die Stange gegeneinander vorgesehen sind. Das erste Rohr oder die Stange sind im Verhältnis zum zweiten Rohr um einen ersten und einen zweiten Weg transportierbar, wobei für den Transport um den ersten Weg eine in dem zweiten Rohr angeordnete, mit diesem verbundene Gasdruckfeder oder Schraubenfeder vorgesehen ist, und wobei für den Transport um den zweiten Weg eine mit einem von Hand zu betätigenden Vorschubmittel versehene Ratsche, Zahnstange, Klemmhalterung oder dergleichen vorgesehen ist.

Aus der US 2012/0034023 A1 ist eine teleskopische Vorrichtung bekannt, welche ein Innenrohr aufweist, das teleskopierbar in ein Außenrohr eingeschoben ist. An dem Außenrohr ist ein Rahmen angeordnet, mit welchem ein Hebel schwenkbar verbunden ist. Der Hebel weist ein Element auf, welches in Einbuchtungen des Innenrohrs eingreifen kann, um eine Feststellung des Innenrohrs relativ zu dem Außenrohr zu bewirken.

Aus der DE 296 01 103 U1 ist eine Teleskopstütze bekannt, welche ein Außenrohr und einen in dem Außenrohr verschiebbaren Stützteil aufweist. Es ist eine lösbare, ein Einschieben des ausgeschobenen Stützteils verhindernde Sperreinrichtung vorgesehen.

Aus der US 4,928,916 ist eine weitere Stütze bekannt.

Über eine solche Stütze lässt sich an einer Anwendung, welche eine erste Wandung und eine gegenüberliegende zweite Wandung aufweist, eine Abstützwirkung erzielen. Beispielsweise wird das erste Anlageelement an die erste Wandung angelegt und das zweite Anlageelement wird an die zweite Wandung angelegt. Durch Drehung der Kombination aus erstem Stab und zweitem Stab lässt sich aufgrund der gegensinnigen Gewinde eine entsprechende Kraft einbringen. Es wird eine Stützfunktion an der Anwendung erzielt.

Der Erfindung liegt die Aufgabe zugrunde, eine Stütze der eingangs genannten Art bereitzustellen, welche eine einfache Bedienbarkeit ermöglicht.

Diese Aufgabe wird bei der Stütze der eingangs genannten Art erfindungsgemäß dadurch gelöst, dass an dem zweiten Stab ein Handgriff angeordnet ist, welcher mit einer einzigen Hand greifbar ist und über den eine Drehung der Kombination aus erstem Stab und zweitem Stab durchführbar ist, dass an dem zweiten Stab eine Betätigungseinrichtung angeordnet ist, welche auf den ersten Stab wirkt und welche ein Betätigungselement umfasst, wobei durch Betätigung des Betätigungselements eine Verschiebung des ersten Stabs in einer ersten Verschiebungsrichtung antreibbar ist, und wobei die erste Verschiebungsrichtung eine Abstandsvergrößerungsrichtung zwischen dem ersten Anlageelement und dem zweiten Anlageelement ist, dass die Betätigungseinrichtung eine Sperreinrichtung aufweist, welche eine Verschiebung des ersten Stabs zu dem zweiten Stab in einer zweiten Verschiebungsrichtung, welche entgegengesetzt zu der ersten Verschiebungsrichtung ist, sperrt, zumindest wenn kein aktiver Löseeingriff an der Sperreinrichtung erfolgt, und dass das Betätigungselement so in Relation zu dem Handgriff angeordnet ist, dass bei Halten der Stütze an dem Handgriff mit einer Haltehand das Betätigungselement über einen oder mehrere Finger dieser Haltehand betätigbar ist.

Durch Einwirkung auf die Betätigungseinrichtung durch das Betätigungselement lässt sich der erste Stab in eine Position bringen, in welcher sein zugeordnetes erstes Anlageelement an einer Wandung einer Anwendung anliegt. Wenn das zweite Anlageelement an einer gegenüberliegenden Wandung anliegt, dann ist die Stütze an der Anwendung voreingespannt. Durch Drehung der Kombination aus erstem Stab und zweitem Stab mit den gegensinnigen Gewinden lässt sich dann eine endgültige Einspannung mit hoher Kraftbelastbarkeit bzw. Kraftübertragung erreichen.

Die Betätigungseinrichtung ermöglicht es, eine Verschiebung des ersten Stabs in der Verschiebungsrichtung durch Betätigung des Betätigungselements zu erreichen. Dadurch ist grundsätzlich eine Einhandbedienbarkeit möglich. Ein Bediener muss insbesondere beispielsweise nicht die Kombination aus zweitem Stab und erstem Stab mit einer Hand halten und mit der anderen Hand den ersten Stab in der ersten Verschiebungsrichtung ziehen; bei der erfindungsgemäßen Lösung ist es möglich, mit der Haltehand auch das Betätigungselement zu bedienen. Dadurch ergibt sich bei vereinfachter Bedienbarkeit eine erhöhte Einsatzbreite.

Die Sperreinrichtung sorgt dafür, dass eine durch Betätigung des Betätigungselements erreichte Verschiebungsposition erhalten bleibt.

Es ist grundsätzlich auch möglich, dass in einer eingespannten Stellung die Sperreinrichtung die Belastungskräfte an der Stütze aufnimmt.

Günstig ist es, wenn das Betätigungselement ein Hebelelement ist oder umfasst oder an ein Hebelelement gekoppelt ist, welches um eine Schwenkachse schwenkbar an dem zweiten Stab angeordnet ist. Über ein solches Hebelelement lässt sich auf einfache Weise ein Pumpmechanismus realisieren, um eine Verschiebung des ersten Stabs zu dem zweiten Stab in der ersten Verschiebungsrichtung zu bewirken, wobei insbesondere auf einfache Weise eine Einhandbedienbarkeit realisierbar ist. Durch ein schwenkbar gelagertes Hebelelement lässt sich auf einfache Weise auf ein Schubelement einwirken, welches durch das Hebelelement in eine Vorschubstellung an dem ersten Stab gebracht wird und dann in der Vorschubstellung um eine bestimmte Distanz verschoben wird, wodurch wiederum der erste Stab relativ zu dem zweiten Stab verschoben wird. Grundsätzlich ist es möglich, dass das Betätigungselement ein von dem Hebelelement getrenntes Element ist, welches dann entsprechend kräftewirksam bzw. momentenwirksam an das Hebelelement gekoppelt ist. Es ist zum Beispiel denkbar, dass das Betätigungselement Teil eines Motors wie eines Elektromotors ist, welcher dann auf das Hebelelement wirkt. Bei einer konstruktiv günstigen Ausführungsform, welche eine einfache und kompakte Bauweise der Stütze ermöglicht, ist das Hebelelement direkt an dem Betätigungselement gebildet und beispielsweise einstückig mit ihm gebildet. Eine Verschwenkung des Betätigungselements ist dann direkt eine Verschwenkung des Hebelelements.

Insbesondere ist die Schwenkachse, um welche das Hebelelement schwenkbar ist, quer und vorzugsweise senkrecht zu der ersten Verschiebungsrichtung orientiert. Dadurch lässt sich auf einfache Weise eine Verschiebungsbewegung des ersten Stabs in der ersten Verschiebungsrichtung insbesondere in einer Art Pumpvorgang antreiben.

Es ist ferner günstig, wenn das Betätigungselement und/oder das Hebelelement an einem Halter angeordnet ist, welcher an dem zweiten Stab fixiert ist. Dadurch ergibt sich eine kompakte Bauweise. Ferner lässt sich auf einfache Weise eine Einhandbedienbarkeit realisieren.

Es ergibt sich eine konstruktiv einfache Bauweise, wenn an einer Außenseite des Halters ein Schwenklager angeordnet ist, an welchem das Betätigungselement und/oder das Hebelelement schwenkbar gelagert ist. Es lässt sich dadurch auf einfache Weise ein Betätigungselement realisieren, auf welches ein Bediener von einer Außenseite her zugreifen kann, um insbesondere in einer Art von Pumpmechanismus eine Verschiebung des ersten Stabs in der ersten Verschiebungsrichtung zu realisieren. Die entsprechende Stütze lässt sich auf einfache Weise herstellen und es ergibt sich ein kompakter Aufbau.

Günstig ist es, wenn der Halter als Hülse wie beispielsweise als Hohlzylinder ausgebildet ist. Der Halter kann dann insbesondere auch als Führungseinrichtung oder Teil der Führungseinrichtung für die Führung des ersten Stabs an dem zweiten Stab verwendet werden. Ferner kann er durch eine Ausbildung als Hülse ein geschlossenes Gehäuse für Komponenten der Betätigungseinrichtung bilden, sodass diese geschützt angeordnet sind.

Insbesondere weist der Halter eine durchgehende Ausnehmung auf, durch welche der erste Stab durchgetaucht ist. Dadurch lässt sich auf einfache Weise eine Führung des ersten Stabs an dem zweiten Stab realisieren. Insbesondere ist bei entsprechender Ausbildung der Ausnehmung eine Gleitführung des ersten Stabs an dem zweiten Stab über den Halter realisiert. Die Führung wiederum lässt sich durch entsprechende Anpassung eines Außenquerschnitts des Stabs an die Form der Ausnehmung so realisieren, dass der erste Stab bezüglich des zweiten Stabs drehfest geführt ist. Beispielsweise wird für den ersten Stab im Querschnitt ein nicht rotationssymmetrisches Profil gewählt mit einer entsprechend angepassten Ausnehmung des Halters.

Günstig ist es, wenn der Halter an einem Handgriff angeordnet ist, welcher an dem zweiten Stab positioniert ist und insbesondere mit dem Handgriff verbunden ist und insbesondere der Halter und der Handgriff einstückig verbunden sind. Dadurch ergibt sich ein konstruktiv einfacher Aufbau. Die Anzahl der für die Stütze benötigten Einzelteile lässt sich minimieren. Die Herstellung und der Zusammenbau sind vereinfacht. Weiterhin kann dann auf einfache Weise erreicht werden, dass die Stütze einhändig bedienbar ist. Sie kann an dem Handgriff gehalten werden und es kann durch Drehung der Stütze (als Kombination aus erstem Stab und zweitem Stab) eine Einspannung an einer Anwendung bewirkt werden. Mit der Haltehand, welche an dem Handgriff die Stütze hält, kann auch, insbesondere ohne dass ein Umgreifen notwendig ist, das Betätigungselement der Betätigungseinrichtung zur Verschiebung des ersten Stabs in der ersten Verschiebungsrichtung betätigt werden.

An dem zweiten Stab ist ein Handgriff angeordnet, welcher mit einer einzigen Hand greifbar ist und über den eine Drehung der Kombination aus dem ersten Stab und zweitem Stab durchführbar ist. Dadurch ergibt sich eine einfache Bedienbarkeit. Insbesondere ist der Handgriff so ausgebildet, dass er ergonomisch günstig ist und beispielsweise ein Abrutschen der Bedienerhand verhindert bzw. erschwert.

Günstigerweise ist der Handgriff als Hülse ausgebildet, welcher an dem zweiten Stab sitzt und insbesondere den zweiten Stab umgibt. Dadurch ergibt sich eine einfache Herstellbarkeit.

Das Betätigungselement ist so in Relation zu dem Handgriff angeordnet, dass bei Halten der Stütze an dem Handgriff mit einer Haltehand das Betätigungselement über einen oder mehrere Finger dieser Haltehand betätigbar ist. Die entsprechende Dimensionierung ist dabei insbesondere auf eine "Durchschnittshand" ausgerichtet. Es kann dann ein Bediener an dem Handgriff mit der Haltehand die Stütze halten und über Betätigung an dem Betätigungselement in eine Vorspannungsstellung bringen, in welcher die Anlageelemente an der Anwendung anliegen. Wenn diese Stellung dann erreicht ist, so dass eine Drehung des ersten Stabs und des zweiten Stabs relativ zu den Anlageelementen möglich ist, dann kann er die Kombination aus erstem Stab und zweitem Stab angreifend an dem Handgriff drehen und die endgültige Stützstellung einstellen. Diese Vorgänge lassen sich alle mit einer einzigen Hand durchführen. Die andere Bedienerhand ist dann für andere Tätigkeiten frei. Es ergibt sich ein hoher Bedienerkomfort.

Es ist ergonomisch günstig, wenn das Betätigungselement eine Fingeranlage-Mulde aufweist, in welche beispielsweise ein Bereich um das Daumensattelgelenk oder einer Zeigefingerspitze einlegbar ist, je nachdem wie der Bediener den Handgriff hält. Dadurch ergibt sich ein hoher Bedienungskomfort für eine Einhandbedienung.

Bei einer Ausführungsform weist die Betätigungseinrichtung mindestens ein Schubelement auf, welches auf den ersten Stab wirkt, wobei das Hebelelement auf das mindestens eine Schubelement wirkt. Durch das mindestens eine Schubelement lässt sich auf einfache Weise ein Pumpmechanismus für eine Verschiebungsantreibung des ersten Stabs in der ersten Verschiebungsrichtung realisieren. Durch das Hebelelement lässt sich eine Hebelübersetzung bereitstellen, sodass sich ein hoher Bedienungskomfort ergibt.

Es ist günstig, wenn das mindestens eine Schubelement eine Grundstellung oder einen Grundstellungsbereich bezüglich des ersten Stabs aufweist, in welcher oder welchem der erste Stab verschieblich bezüglich des mindestens einen Schubelements und des zweiten Stabs ist. Beispielsweise lässt sich dann bei Lösung der Sperreinrichtung der erste Stab an dem zweiten Stab, wenn das Schubelement in dieser Grundstellung oder in diesem Grundstellungsbereich ist, in der zweiten Verschiebungsrichtung führen. Dadurch kann beispielsweise auf einfache Weise eine Stützstellung gelöst werden. Grundsätzlich ist es auch möglich, wenn das mindestens eine Schubelement in der Grundstellung oder in dem Grundstellungsbereich ist, und die Sperreinrichtung gelöst ist, den ersten Stab mit der anderen Bedienerhand, welche die Stütze nicht hält, "manuell" herauszuziehen.

Es ist weiterhin günstig, wenn das mindestens eine Schubelement eine Vorschubstellung oder einen Vorschubstellungsbereich aufweist, in welcher oder welchem das mindestens eine Schubelement an dem ersten Stab fixiert ist, wobei das mindestens eine Schubelement durch eine Schwenkbewegung des Hebelelements in einer ersten Schwenkrichtung aus der Grundstellung oder dem Grundstellungsbereich in die Vorschubstellung oder den Vorschubstellungsbereich bringbar ist. Durch das Betätigungselement lässt sich entsprechend auf das Hebelelement einwirken. Wenn die Vorschubstellung oder der Vorschubstellungsbereich für das mindestens eine Schubelement erreicht ist, dann lässt sich über eine entsprechende Hebelübersetzung das mindestens eine Schubelement gegenüber dem zweiten Stab verschieben und dadurch lässt sich auch der erste Stab in der ersten Verschiebungsrichtung gegenüber dem zweiten Stab verschieben.

Es ist ferner günstig, wenn die Betätigungseinrichtung so ausgebildet ist, dass ausgehend von der Vorschubstellung oder dem Vorschubstellungsbereich des mindestens einen Schubelements eine weitere Schwenkung des Hebelelements in der ersten Schwenkrichtung das mindestens eine Schubelement und aufgrund der Fixierung den ersten Stab relativ zu dem zweiten Stab translatorisch in der ersten Verschiebungsrichtung bewegt. Es wird dadurch eine Verschiebungsbewegung in der ersten Verschiebungsrichtung durch einen mechanisch relativ einfach ausgebildeten Mechanismus angetrieben. Dieser Mechanismus lässt sich auf kompakte Weise realisieren.

Es ist ferner günstig, wenn das mindestens eine Schubelement federbeaufschlagt ist, wobei eine entsprechende Federeinrichtung so angeordnet und ausgebildet ist, dass sie bestrebt ist, das mindestens eine Schubelement von der Vorschubstellung oder dem Vorschubstellungsbereich in die Grundstellung oder den Grundstellungsbereich zu bringen. Wenn das Hebelelement keine entsprechende Kraft ausübt, dann kann dadurch automatisch wieder die Grundstellung bzw. der Grundstellungsbereich erreicht werden. Dadurch lässt sich auf einfache Weise ein Pumpvorgang zur Verschiebung des ersten Stabs in der ersten Verschiebungsrichtung durchführen. Durch eine Schwenkbewegung des Betätigungselements in der ersten Schwenkrichtung wird eine Verklemmung des mindestens einen Schubelements mit dem ersten Stab erreicht und ein Vorschub um eine bestimme Wegstrecke in der ersten Verschiebungsrichtung erzielt. Wenn das Betätigungselement losgelassen wird, dann kehrt das mindestens eine Schubelement in seine Ausgangsstellung zurück, wobei die eingestellte Verschiebungsposition erhalten bleibt. Durch eine weitere Schwenkung des Betätigungselements in der ersten Schwenkrichtung lässt sich ein weiterer Vorschub erzielen usw. Dadurch kann schrittweise (durch die "Pumpbetätigung") der erste Stab in der ersten Verschiebungsrichtung verschoben werden, wobei jede Verschiebungsposition, wenn sie erreicht ist, gesichert ist.

Es ist dann ferner günstig, wenn das Hebelelement und/oder das Betätigungselement federbeaufschlagt ist, wobei eine entsprechende Federeinrichtung so angeordnet und ausgebildet ist, dass sie bestrebt ist, das Hebelelement und/oder das Betätigungselement in einer zweiten Schwenkrichtung entgegen der ersten Schwenkrichtung zu bewegen. Dadurch lässt sich auf einfache Weise ein Pumpmechanismus realisieren. Der Bediener bewegt aktiv unter Überwindung der Federkraft der genannten Federeinrichtung das Betätigungselement in der ersten Schwenkrichtung. Durch Loslassen des Betätigungselements kehrt dieses in seine Ausgangsstellung zurück und es lässt sich dann eine weitere Schwenkbewegung in der ersten Schwenkrichtung durchführen.

Insbesondere ist bei einer Schwenkung des Hebelelements in der ersten Schwenkrichtung das Betätigungselement auf den zweiten Stab zu bewegt, wobei insbesondere das Hebelelement an dem Betätigungselement gebildet ist. Dadurch lässt sich auf einfache Weise eine Betätigungseinrichtung mit einem Pumpmechanismus ausbilden, welcher kompakt aufgebaut ist und konstruktiv vorteilhaft ausgebildet ist.

Bei einer Ausführungsform ist das mindestens eine Schubelement plattenförmig ausgebildet mit einer Mittelebene, wobei in der Vorschubstellung oder dem Vorschubstellungsbereich die Mittelebene in einem ersten spitzen Winkel zu einer senkrechten Ebene zu der ersten Verschiebungsrichtung orientiert ist und in der Grundstellung oder dem Grundstellungsbereich mindestens näherungsweise parallel oder in einem zweiten spitzen Winkel, welcher kleiner ist als der erste spitze Winkel, zu dieser senkrechten Ebene orientiert ist. Das Schubelement ist beispielsweise als Blechelement ausgebildet. Es ergibt sich bei einfachem konstruktivem Aufbau eine kompakte Realisierung.

Es ist vorgesehen, dass das mindestens eine Schubelement eine Ausnehmung aufweist, durch welche der erste Stab durchgetaucht ist. Dadurch lässt sich auf einfache Weise die Winkelorientierung des mindestens einen Schubelements zu dem ersten Stab ändern, um insbesondere eine Verklemmung zu erreichen.

Ganz besonders vorteilhaft ist es, wenn die Sperreinrichtung lösbar und insbesondere manuell lösbar ist, wobei ohne Lösung eine Verschiebung des ersten Stabs relativ zu dem zweiten Stab in der zweiten Verschiebungsrichtung gesperrt ist und bei Lösung einer Verschiebung des ersten Stabs in der zweiten Verschiebungsrichtung freigegeben ist. Dadurch ist sichergestellt, dass bei der Verschiebung in der ersten Verschiebungsrichtung kein "Rückschnappen" des ersten Stabs in der zweiten Verschiebungsrichtung erfolgt. Durch die Lösbarkeit und insbesondere manuelle Lösbarkeit kann aber nach Bedarf eben eine Bewegung des ersten Stabs in der zweiten Verschiebungsrichtung erfolgen.

Günstig ist es, wenn die Sperreinrichtung mindestens ein Sperrelement aufweist, welches mit dem ersten Stab verklemmbar oder verrastbar ist. Durch die Verklemmung oder Verrastung mit dem ersten Stab lässt sich eine Sperrstellung erreichen. Durch die Sperrstellung kann die Verschiebungsbewegung des ersten Stabs relativ zu dem zweiten Stab in der zweiten Verschiebungsrichtung gesperrt werden. Durch eine Verklemmung oder Verrastung mit dem ersten Stab kann durch eine Bewegung des ersten Stabs in der ersten Verschiebungsrichtung aber auch die Sperrstellung aufgehoben werden. Beispielsweise kann das Sperrelement auch zur Verrastung mit dem ersten Stab vorgesehen sein. Beispielsweise ist das Sperrelement durch eine Nase gebildet, welche in eine entsprechende Ausnehmung des ersten Stabs eintauchen kann.

Ganz besonders vorteilhaft ist es, wenn das mindestens eine Sperrelement schwenkbar relativ dem ersten Stab angeordnet ist, wobei abhängig von einer Schwenkstellung das mindestens eine Sperrelement in einer Klemmstellung oder Raststellung an dem ersten Stab ist oder der erste Stab freigegeben ist. Eine Lösbarkeit an der Sperreinrichtung lässt sich dadurch erreichen, dass von außen manuell eine entsprechende Schwenkbewegung durchgeführt wird, um eine Freigabe zu ermöglichen. Dadurch kann der erste Stab relativ zu dem zweiten Stab frei verschoben werden (in der ersten Verschiebungsrichtung und in der zweiten Verschiebungsrichtung). Es ist dadurch aber auch möglich, über eine Bewegung des ersten Stabs eine Sperrstellung aufzuheben. Wenn in einer bestimmten Schwenkstellung das mindestens eine Sperrelement mit dem ersten Stab verklemmt oder verrastet ist und durch eine Verschiebung des ersten Stabs (in der ersten Verschiebungsrichtung) die Schwenkstellung geändert wird, dann ist dadurch eine Verschiebung des ersten Stabs in der ersten Verschiebungsrichtung und auch relativ zu dem mindestens einen Sperrelement möglich. Es lässt sich dadurch eine automatische Aufhebung der Sperrstellung für eine Verschiebung in der ersten Verschiebungsrichtung erreichen. Es ist dadurch eine automatische Anpassung an der Betätigungseinrichtung realisiert. Wenn eine Betätigung an dem Betätigungselement für eine Verschiebung in der ersten Verschiebungsrichtung erfolgt, dann wird automatisch die Sperrung durch die Sperreinrichtung aufgehoben, um eben die Verschiebung in der ersten Verschiebungsrichtung zu ermöglichen. Die Verschiebung in der zweiten Verschiebungsrichtung ist aber gesperrt, wenn ein Vorschubvorgang an der Betätigungseinrichtung in der ersten Verschiebungsrichtung beendet ist. Weiterhin lässt sich durch eine aktive manuelle Verschwenkung eine Sperrstellung von außen her aufheben.

Insbesondere wird bei einer Verschiebungsbewegung des ersten Stabs in der ersten Verschiebungsrichtung mittels des Betätigungselements das mindestens eine Sperrelement durch die Verschiebung des ersten Stabs aus einer Klemmstellung oder Raststellung in eine Freigabestellung gebracht. Eine entsprechende Betätigung des Betätigungselements (welche insbesondere zu einer Verklemmung und Verschiebung eines Schubelements an dem ersten Stab führt) führt dann automatisch über die Verschiebung des ersten Stabs zu einer Aufhebung einer Sperrstellung an der Sperreinrichtung, welches dann wiederum gerade einen Vorschub in der ersten Verschiebungsrichtung ermöglicht.

Es ist dann günstig, wenn in einer Klemmstellung oder in einem Klemmstellungsbereich das mindestens eine Sperrelement bezogen auf eine Mittelebene in einem spitzen Winkel zu einer senkrechten Ebene zu der ersten Verschiebungsrichtung liegt, wobei dieser spitze Winkel ein umgekehrtes Vorzeichen im Vergleich zu einem spitzen Winkel eines Schubelements zum Antreiben einer Bewegung in der ersten Verschiebungsrichtung aufweist, wenn dieses Schubelement in einer Klemmstellung an dem ersten Stab ist. Dadurch kann durch die Kraftausübung auf den ersten Stab über das Schubelement die Klemmstellung des Sperrelements an dem mindestens einen Sperrelement genutzt werden, um eine Sperrung durch das mindestens eine Sperrelement aufzuheben. Dieses "Aufheben" ist dabei nur wirksam in einer Richtung, nämlich für eine Verschiebung des ersten Stabs in der ersten Verschiebungsrichtung.

Beispielsweise ist das mindestens eine Sperrelement plattenförmig ausgebildet und insbesondere als Blechelement ausgebildet.

Es ist ferner günstig, wenn das mindestens eine Sperrelement eine Ausnehmung aufweist, durch welche der erste Stab durchgetaucht ist. Dadurch lässt sich auf einfache Weise eine Verklemmung an dem ersten Stab erreichen.

Ganz besonders vorteilhaft ist es, wenn ein Sperrelementpaket aus einer Mehrzahl von Sperrelementen vorgesehen ist. Die Sperrelemente in dem Sperrelementpaket können dabei miteinander verbunden sein oder lose aufeinander gestapelt sein. Es lässt sich dadurch eine Verklemmung von mehreren Sperrelementen mit dem ersten Stab erreichen. Es wird dadurch eine höhere Kraftbelastbarkeit erreicht. Es ist grundsätzlich möglich, dass in einer eingespannten Stellung über das mindestens eine Sperrelement die entsprechende Kraft aufgenommen werden muss, wobei das mindestens eine Sperrelement kraftschlüssig an dem ersten Stab gehalten ist. Durch die Vergrößerung der Anlagefläche aufgrund einer Mehrzahl von Sperrelementen lässt sich die Haltekraft erhöhen.

Es kann vorgesehen sein, dass das mindestens eine Sperrelement federbeaufschlagt ist, wobei eine entsprechende Federeinrichtung so angeordnet und ausgebildet ist, dass sie bestrebt ist, das mindestens eine Sperrelement in die Sperrstellung zu bringen. Dadurch wird automatisch, wenn kein entsprechender Eingriff erfolgt, die Sperrstellung hergestellt. Wenn beispielsweise das mindestens eine Sperrelement schwenkbar angeordnet ist, dann drückt die Federeinrichtung das mindestens eine Sperrelement in die Sperrstellung. Durch eine Gegenbewegung entgegen der Federkraft dieser Federeinrichtung kann die Sperrstellung aufgehoben werden. Das Aufheben kann manuell von außen erfolgen. Durch eine Kopplung in der Betätigungseinrichtung kann bei einer Betätigung eines Vorschubs des ersten Stabs in der ersten Verschiebungsrichtung und dabei durch eine Mitnahme des mindestens einen Sperrelements insbesondere in einer Schwenkbewegung ebenfalls die Sperrstellung aufgehoben werden.

Günstig ist es, wenn ein Lösegriff vorgesehen ist, welcher auf das mindestens eine Sperrelement wirkt, wobei insbesondere der Lösegriff an dem mindestens einen Sperrelement angeordnet ist und insbesondere der Lösegriff als Lösetaster ausgebildet ist. Durch den Lösegriff lässt sich manuell auf das mindestens eine Sperrelement einwirken, um insbesondere eine Sperrstellung aufzuheben. Beispielsweise ist der Lösegriff so ausgebildet, dass das mindestens eine Sperrelement relativ zu dem ersten Stab verschwenkbar ist.

Ganz besonders vorteilhaft ist es, wenn der Lösegriff so positioniert ist, dass er mit einer Einhandbedienung betätigbar ist, wenn die Stütze mit einer entsprechenden Hand gehalten ist. Beispielsweise wird die Stütze an einem Handgriff mit einer Hand gehalten. Das Betätigungselement ist beispielsweise mit dem Daumen oder Zeigefinger dieser Haltehand betätigbar. Mit einem anderen Finger, wie beispielsweise dem Zeigefinger oder Daumen, ist dann der Lösegriff betätigbar. Es lässt sich dabei dann eine Einhandbedienung sowohl für eine Einspannung einer Stütze an einer Anwendung als auch für das Lösen der Stütze von der Anwendung erreichen.

Insbesondere ist der Lösegriff an einer Seite angeordnet, welche einer Seite abgewandt ist, an welcher das Betätigungselement angeordnet ist. Zwischen der Seite, an welcher das Betätigungselement angeordnet ist, und der Seite, an welcher der Lösegriff angeordnet ist, liegt der erste Stab. Dadurch ist auf einfache Weise eine Einhandbedienung möglich.

Es ist dabei grundsätzlich möglich, dass der Lösegriff zwischen einem Schubelement der Betätigungseinrichtung und dem zweiten Anlageelement angeordnet ist. Bei dieser Ausführungsform liegt der Lösegriff gewissermaßen unterhalb des Schubelements. Dadurch kann beispielsweise bei dem Halten der Stütze ein Finger wie der Zeigefinger direkt auf den Lösegriff wirken.

Bei einer alternativen Ausführungsform ist der Lösegriff zwischen einem Schubelement der Betätigungseinrichtung und dem ersten Anlageelement angeordnet. Er ist dadurch oberhalb des Schubelements angeordnet. Diese Ausführung kann vorteilhaft sein, wenn ein unbeabsichtigtes Lösen verhindert werden soll, da bei einer solchen Anordnung in der Regel eine Änderung der Handstellung bzw. der Fingerstellung notwendig ist, um auf den Lösegriff einwirken zu können.

Günstigerweise weist der zweite Stab einen Eintauchbereich für den ersten Stab auf. Dadurch lässt sich eine kompakte Stütze mit einer großen Spannweite realisieren. Insbesondere ist der erste Stab in dem Eintauchbereich geführt. Er ist beispielsweise durch eine Gleitführung geführt; eine Innenseite des zweiten Stabs an dem Eintauchbereich bildet dann vorzugsweise ein Gleitlager für eine Außenseite desjenigen Bereichs des ersten Stabs, welcher in dem Eintauchbereich positioniert ist. Durch die Führung des ersten Stabs in dem Eintauchbereich des zweiten Stabs wird einer Ausknickgefahr entgegengewirkt.

Ganz besonders vorteilhaft ist es, wenn in dem Eintauchbereich an einem Ende, welches dem zweiten Anlageelement zugewandt ist, ein Dämpfer und insbesondere eine elastische Anschlageinrichtung für den ersten Stab angeordnet ist. Die elastische Anschlageinrichtung ist beispielsweise durch einen oder mehrere Puffer wie Gummipuffer gebildet oder es ist beispielsweise ein hydraulischer oder pneumatischer Dämpfer vorgesehen oder es kann ein Reibungsdämpfer vorgesehen sein. Wenn beispielsweise die Sperreinrichtung gelöst wird, dann kann der erste Stab in dem Eintauchbereich an eine innere Anschlagsfläche des zweiten Stabs fallen und dabei hart anschlagen. Durch die elastische Anschlageinrichtung wird der Anschlag gedämpft. Es ergibt sich dadurch ein erhöhter Bedienungskomfort.

Bei einer Ausführungsform ist der erste Stab mit Ausnehmungen versehen und die Betätigungseinrichtung weist mindestens ein Eingreifelement auf, welches in eine Ausnehmung eintauchbar ist. Durch das Eintauchen des Eingreifelements in eine zugeordnete Ausnehmung lässt sich eine Verschiebungsposition des ersten Stabs zu dem zweiten Stab bezogen auf die erste Verschiebungsrichtung und die zweite Verschiebungsrichtung formschlüssig sichern. Es ergibt sich dadurch eine hohe Kraftbelastbarkeit der entsprechenden Stütze.

Es ist dann günstig, wenn das mindestens eine Eingreifelement an einem Halter für das Betätigungselement angeordnet ist. Dadurch ergibt sich ein kompakter Aufbau. Ferner lässt sich eine Einhandbedienbarkeit realisieren.

Beispielsweise weist die Betätigungseinrichtung einen Schalter auf, welcher auf das mindestens eine Eingreifelement wirkt und über den das mindestens eine Eingreifelement in eine Ausnehmung eintauchbar und austauchbar ist. Dadurch ergibt sich eine einfache Bedienbarkeit.

Es ist dann günstig, wenn der Schalter so angeordnet ist, dass er mit der Hand bedienbar ist, welche die Stütze hält und insbesondere mit welcher bei Halten der Stütze das Betätigungselement bedienbar ist. Es ergibt sich dadurch eine komplette Einhandbedienbarkeit der Stütze.

Ganz besonders vorteilhaft ist es, wenn der erste Stab an dem zweiten Stab drehfest angeordnet ist. Dadurch lässt sich zum Einstellen einer endgültigen Position bzw. Stützkraft der Stütze die Kombination aus erstem Stab und zweitem Stab drehen und dabei relativ zu dem ersten Anlageelement und dem zweiten Anlageelement drehen.

Die nachfolgende Beschreibung bevorzugter Ausführungsformen dient im Zusammenhang mit den Zeichnungen der näheren Erläuterung der Erfindung. Es zeigen:
- Figur 1: eine Seitenansicht eines Ausführungsbeispiels einer erfindungsgemäßen Stütze;
- Figur 2: eine Schnittansicht der Stütze gemäß Figur 1 längs der Linie 2-2 gemäß Figur 3;
- Figur 3: eine andere Seitenansicht der Stütze gemäß Figur 1;
- Figur 4: eine Schnittansicht längs der Linie 4-4 gemäß Figur 1;
- Figur 5: eine vergrößerte Darstellung des Bereichs B gemäß Figur 2 in einer Grundstellung eines Schubelements;
- Figur 6: eine vergrößerte Darstellung des Bereichs B gemäß Figur 2 in einer Vorschubstellung des Schubelements;
- Figur 7: eine vergrößerte Darstellung des Bereichs C gemäß Figur 2;
- Figur 8: eine Schnittansicht ähnlich wie Figur 5 für ein weiteres Ausführungsbeispiel einer Stütze;
- Figur 9: eine Seitenansicht eines weiteren Ausführungsbeispiels einer erfindungsgemäßen Stütze;
- Figur 10: eine Schnittansicht ähnlich wie Figur 5 eines weiteren Ausführungsbeispiels einer Stütze; und
- Figur 11: eine vergrößerte Darstellung des Bereichs D gemäß Figur 10.

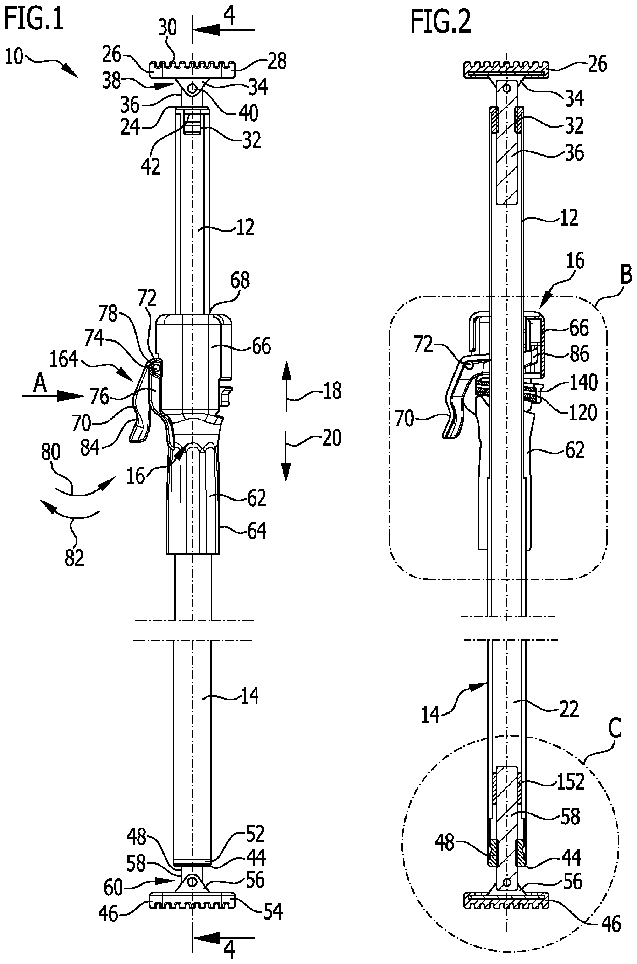

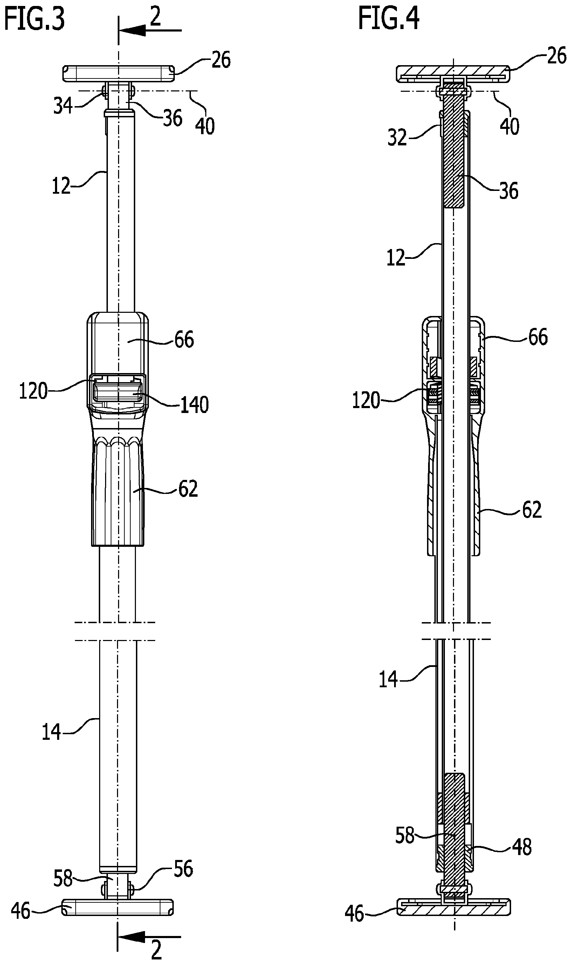

Ein erstes Ausführungsbeispiel einer erfindungsgemäßen Stütze, welches in den Figuren 1 bis 7 gezeigt und mit 10 bezeichnet ist, umfasst einen ersten Stab 12 und einen zweiten Stab 14. Der erste Stab 12 ist an dem zweiten Stab 14 über eine Führungseinrichtung 16 verschieblich geführt.

Der erste Stab 12 ist über die Führungseinrichtung 16 zu dem zweiten Stab 14 in einer ersten Verschiebungsrichtung 18 und in einer zweiten Verschiebungsrichtung 20 verschieblich, wobei die zweite Verschiebungsrichtung 20 die Gegenrichtung zu der ersten Verschiebungsrichtung 18 ist.

Bei einem Ausführungsbeispiel weist der zweite Stab 14 einen Eintauchbereich 22 auf, in welchen der erste Stab 12 eingetaucht ist.

Der zweite Stab 14 ist insbesondere als Hohlrohr ausgebildet, wobei der Eintauchbereich 22 des zweiten Stabs 14 durch einen entsprechenden Innenraum dieses Hohlrohrs gebildet ist.

Der erste Stab 12 weist eine Längserstreckung in der ersten Verschiebungsrichtung 18 auf. Der zweite Stab 14 weist eine Längserstreckung in der zweiten Verschiebungsrichtung 20 auf. Ein Durchmesser des ersten Stabs 12 ist erheblich kleiner als eine Länge des ersten Stabs 12 in der ersten Verschiebungsrichtung 18. Ein Durchmesser des zweiten Stabs 14 ist erheblich kleiner als eine Länge des zweiten Stabs 14 in der ersten Verschiebungsrichtung 18. Insbesondere weist der erste Stab 12 eine Länge in der ersten Verschiebungsrichtung 18 auf, welche mindestens 30 cm und insbesondere mindestens 50 cm beträgt. Ferner weist der zweite Stab 14 in der ersten Verschiebungsrichtung 18 eine Länge auf, welche mindestens 30 cm und insbesondere mindestens 50 cm beträgt.

An dem ersten Stab 12 ist im Bereich eines Endes 24 des ersten Stabs 12 ein erstes Anlageelement 26 angeordnet. Das Ende 24 des ersten Stabs 12 ist dabei abgewandt zu dem zweiten Stab 14.

Das erste Anlageelement 26 ist beispielsweise als Platte 28 ausgebildet, welche bei einer Ausführungsform mit einem Profil 30 wie beispielsweise mit einem Rippenprofil, welches beabstandete Rinnen mit dazwischenliegenden Rippen aufweist, versehen ist.

Die Platte 28 ist insbesondere aus einem Kunststoffmaterial gefertigt.

Das erste Anlageelement 26 ist über ein erstes Gewinde 32 mit einem ersten Gewindesinn an dem ersten Stab 12 im Bereich dessen Endes 24 gehalten.

Bei einem Ausführungsbeispiel ist an der Platte 28 eine Lascheneinrichtung 34 fixiert. Über die Lascheneinrichtung 34 ist dann das erste Anlageelement 26 an einem Stift 36 gehalten. Insbesondere ist über die Lascheneinrichtung 34, welche beispielsweise beabstandete Laschen aufweist, zwischen welchen der Stift 36 sitzt, und dem Stift 36 ein Schwenklager 38 gebildet. Eine entsprechende Schwenkachse 40 liegt quer und insbesondere senkrecht zu der ersten Verschiebungsrichtung 18. In Figur 1 ist die Schwenkachse 40 senkrecht zur Zeichenebene orientiert.

Das Schwenklager 38 ist insbesondere "schwergängig" in dem Sinne, dass zur Veränderung einer eingestellten Schwenkposition des ersten Anlageelements 26 relativ zu dem ersten Stab 12 eine Kraft notwendig ist. Die "Schwergängigkeit" an dem Schwenklager 38 wird beispielsweise dadurch hergestellt, dass zwischen dem Stift 36 und Laschen der Lascheneinrichtung 34 ein oder mehrere Scheiben und insbesondere Kunststoffscheiben sitzen, welche ein kraftschlüssiges Halten einer eingestellten Schwenkposition ermöglichen.

Der Stift 36 ist insbesondere als Gewindestift ausgebildet, welcher ein Außengewinde aufweist. Der Stift 36 ist dann bezogen auf eine Drehachse parallel zu der ersten Verschiebungsrichtung 18 drehfest mit dem ersten Anlageelement 26 verbunden.

Das erste Gewinde 32, welches an dem ersten Stab 12 positioniert ist, ist dann ein Innengewinde, in welches das Außengewinde des Stifts 36 eingreift.

Bei einer Ausführungsform sitzt an dem Ende 24 des ersten Stabs 12 ein Einsatz 42, welcher an dem ersten Stab 12 fixiert ist. Der Einsatz 42 ist beispielsweise durch Presssitz mit dem ersten Stab 12 verbunden oder mit dem ersten Stab 12 verstemmt.

An dem Einsatz 42 ist das erste Gewinde 32 gebildet, welches dann entsprechend an dem ersten Stab 12 über den Einsatz 42 fixiert ist.

An einem Ende 44 des zweiten Stabs 14 sitzt ein zweites Anlageelement 46. Das zweite Anlageelement 46 ist über ein zweites Gewinde 48 an dem zweiten Stab 14 fixiert. Das Ende 44, an welchem das zweite Anlageelement 46 sitzt, ist dabei abgewandt zu dem Ende 24 des ersten Stabs 12, an welchem das erste Anlageelement 26 sitzt.

Das zweite Gewinde 48, über welches das zweite Anlageelement 46 an dem zweiten Stab 14 sitzt, weist einen zweiten Gewindesinn auf. Der zweite Gewindesinn ist entgegengesetzt zu dem ersten Gewindesinn des ersten Gewindes 32.

Wenn das erste Gewinde 32 ein Linksgewinde ist, dann ist das zweite Gewinde 48 ein Rechtsgewinde. Wenn das erste Gewinde 32 ein Rechtsgewinde ist, dann ist das zweite Gewinde 48 ein Linksgewinde.

Bei einem Ausführungsbeispiel ist an dem Ende 44 des zweiten Stabs 14 ein Einsatz 52 positioniert, welcher beispielsweise mit dem zweiten Stab 14 verstemmt ist. Dieser Einsatz 52 bildet das zweite Gewinde 48 aus.

Das zweite Anlageelement 46 ist grundsätzlich gleich ausgebildet wie das erste Anlageelement 26 mit einer Platte 54, einer Lascheneinrichtung 56 und einem Stift 58.

Die Platte 54 ist an dem Stift 58 über ein Schwenklager 60 gehalten, wobei eine entsprechende Welle an der Lascheneinrichtung 56 fixiert ist.

Eine entsprechende Schwenkachse des Schwenklagers 60 ist parallel zu der Schwenkachse 40.

Der Stift 58 ist vorzugsweise als Gewindestift ausgebildet mit einem Außengewinde, welches in das zweite Gewinde 48 eingreift, welches entsprechend dann als Innengewinde ausgebildet ist.

Die Platte 54 kann gleich ausgebildet sein wie die Platte 28. Sie kann auch andere Abmessungen aufweisen und kann je nach Anwendung beispielsweise kleinere oder größere laterale Abmessungen aufweisen.

Durch die Positionierung des ersten Anlageelements 26 an dem ersten Stab 12 über das erste Gewinde 32 hängt die relative Lage der Schwenkachse 40 in einer Ebene senkrecht zu der ersten Verschiebungsrichtung 18 von der jeweiligen Drehposition des ersten Anlageelements 26 zu dem ersten Stab 12 ab.

Entsprechend hängt die Position der Schwenkachse des Schwenklagers 60 in einer Ebene senkrecht zu der ersten Verschiebungsrichtung 18 von der Drehposition des zweiten Anlageelements 46 zu dem zweiten Stab 14 ab.

Durch Verschiebung in der ersten Verschiebungsrichtung 18 lässt sich der Abstand zwischen dem ersten Anlageelement 26 und dem zweiten Anlageelement 46 vergrößern. Die erste Verschiebungsrichtung 18 ist dadurch eine Abstandsvergrößerungsrichtung für die Anlageelemente 26, 46.

Durch Verschiebung des ersten Stabs 12 relativ zu dem zweiten Stab 14 an der Führungseinrichtung 16 in der zweiten Verschiebungsrichtung 20 lässt sich der Abstand zwischen dem ersten Anlageelement 26 und dem zweiten Anlageelement 46 verkleinern.

Wenn eine Verschiebungsposition zwischen dem ersten Stab 12 und dem zweiten Stab 14 festgestellt ist (wie untenstehend noch näher erläutert wird), dann kann aufgrund der entgegengesetzten Gewindesinne an dem ersten Gewinde 32 und dem zweiten Gewinde 48 durch Drehung der Kombination aus dem ersten Stab 12 und dem zweiten Stab 14 über die Anlageelemente 26, 46 eine Stützkraft ausgeübt werden, durch welche die Stütze 10 an einer Anwendung einspannbar ist; die Stütze liegt dann über das erste Anlageelement 26 an einer ersten Wandung der Anwendung an und über das zweite Anlageelement 46 an einer zweiten Wandung der Anwendung an, wobei die erste Wandung der zweiten Wandung gegenüberliegt und die Stütze 10 als Ganzes zwischen der ersten Wandung und der zweiten Wandung positioniert ist.

Das erste Anlageelement 26 ist über das erste Gewinde 32 drehbar an dem ersten Stab 12 gehalten. Das zweite Anlageelement 46 ist über das zweite Gewinde 48 drehbar an dem zweiten Stab 14 gehalten.

Die Führungseinrichtung 16 ist so ausgebildet, dass zumindest wenn der erste Stab 12 bezüglich des zweiten Stabs 14 für die Verschiebung in den Verschiebungsrichtungen 18, 20 festgelegt ist, der erste Stab 12 bezüglich des zweiten Stabs 14 drehfest ist. Dadurch kann die Kombination aus erstem Stab 12 und zweitem Stab 14 als Ganzes gedreht werden.

Diese Drehfestigkeit kann beispielsweise durch ein entsprechendes Querschnittsprofil des ersten Stabs 12 in Relation zu der Führungseinrichtung 16 bereitgestellt sein.

An dem zweiten Stab 14 ist ein Handgriff 62 angeordnet. Dieser Handgriff 62 ist fest (drehfest, unverschieblich) an dem zweiten Stab 14 und insbesondere einer Außenseite des zweiten Stabs 14 positioniert. Er ist als Hülse 64 ausgebildet, welche den zweiten Stab 14 (vollständig) umgibt.

Der Handgriff 62 dient dazu, wenn die Verschiebungsposition des ersten Stabs 12 relativ zu dem zweiten Stab 14 fixiert ist, eine Drehbewegung der Gesamtkombination durchzuführen, um eine Einspannung der Stütze 10 zwischen der ersten Wandung und der zweiten Wandung der Anwendung, wie oben erläutert, zu bewirken.

Der Handgriff 62 ist so ausgebildet, dass er durch eine einzige Hand durch Umgreifen fassbar ist. Er ist insbesondere so ausgebildet, dass einem Abgleiten der Haltehand entgegengewirkt ist. Insbesondere ist eine Außenseite des Handgriffs 62 nicht-rotationssymmetrisch ausgebildet, um eine gute Drehbarkeit des zweiten Stabs 14 (und damit auch des ersten Stabs 12) zu ermöglichen. Er weist beispielsweise Mulden und Erhöhungen auf, welche beispielsweise parallel oder in einem spitzen Winkel zu der ersten Verschiebungsrichtung 18 orientiert sind.

Der Handgriff 62 ist insbesondere aus einem Kunststoffmaterial hergestellt.

An dem zweiten Stab 14 ist ein Halter 66 positioniert. Dieser ist insbesondere hülsenförmig ausgebildet.

Der Halter 66 ist insbesondere an dem Handgriff 62 positioniert und mit diesem verbunden. Er ist insbesondere mit dem Handgriff 62 einstückig verbunden.

Beispielsweise ist die Kombination aus dem Handgriff 62 und dem Halter 66 als ein Teil ausgebildet, welches in einem Spritzgussverfahren hergestellt ist.

Der Halter 66 weist eine durchgehende Ausnehmung 68 auf, welche mit dem Eintauchbereich 22 des zweiten Stabs 14 verbunden ist. Durch die Ausnehmung 68 ist der erste Stab 12 durchgetaucht und in den Eintauchbereich 22 des zweiten Stabs 14 eingetaucht.

Bei einer Ausführungsform bildet der Halter 66 zusammen mit dem Eintauchbereich 22 die Führungseinrichtung 16 aus. Die Ausnehmung 68 ist entsprechend an ein (Außen-)Profil des ersten Stabs 12 angepasst, um eine translatorische Führung zu ermöglichen. Insbesondere ist dabei die translatorische Führung drehfest bezüglich einer Drehachse parallel zu der ersten Verschiebungsrichtung 18.

Es ist beispielsweise vorgesehen, dass die Ausnehmung 68 an dem Halter 66 so ausgebildet ist, dass der erste Stab 12 geführt ist und in dem Eintauchbereich 22 außerhalb des Halters 66 geführt (in einer Gleitführung) ist. Bei einer Führung auch in dem Eintauchbereich 22 wird einer Ausknickgefahr für den ersten Stab 12 entgegengewirkt.

Der Halter 66 mit seiner Ausnehmung 68 und der Eintauchbereich 22 bilden dann für den ersten Stab 12 ein Gleitlager für eine Verschiebungsführung in der ersten Verschiebungsrichtung 18 und in der zweiten Verschiebungsrichtung 20.

Der Halter 66 ist insbesondere als Hülse ausgebildet.

Der Handgriff 62 weist ein Ende auf, welches dem zweiten Anlageelement 46 zugewandt ist, und ein Ende, welches dem ersten Anlageelement 26 zugewandt ist. Der Halter 66 ist an dem Ende des Handgriffs 62 angeordnet, welches dem ersten Anlageelement 26 zugeordnet ist. Er ist dadurch bezogen auf das zweite Anlageelement 46 oberhalb des Handgriffs 62 angeordnet. Dies ermöglicht, wie untenstehend noch näher erläutert wird, eine Einhandbetätigung an einem Betätigungselement 70, welches an dem Halter 66 angeordnet ist.

Das Betätigungselement 70 ist über ein Schwenklager 72 an dem Halter 66 schwenkbar gelagert. Eine Schwenkachse 74 ist quer und insbesondere senkrecht zu der ersten Verschiebungsrichtung 18 orientiert.

Das Schwenklager 72 ist an einer Außenseite des Halters 66 angeordnet. Dazu sind beispielsweise an dem Halter 66 beabstandete Rippen 76 positioniert. Die Rippen 76 (in Figur 1 ist nur eine gezeigt) sind insbesondere einstückig mit dem Halter 66 verbunden.

Die Rippen 76 weisen entsprechende Öffnungen auf, in welchen eine Welle 78 sitzt, und beispielsweise drehfest an den Rippen 76 sitzt. Auf der Welle 78 ist das Betätigungselement 70 drehbar gelagert. In diesem Sinne ist dann die Welle 78 eine Außenwelle.

Es ist beispielsweise auch möglich, dass die entsprechende Welle drehfest mit dem Betätigungselement 70 verbunden ist und die Welle drehbar an den Rippen 76 gelagert ist.

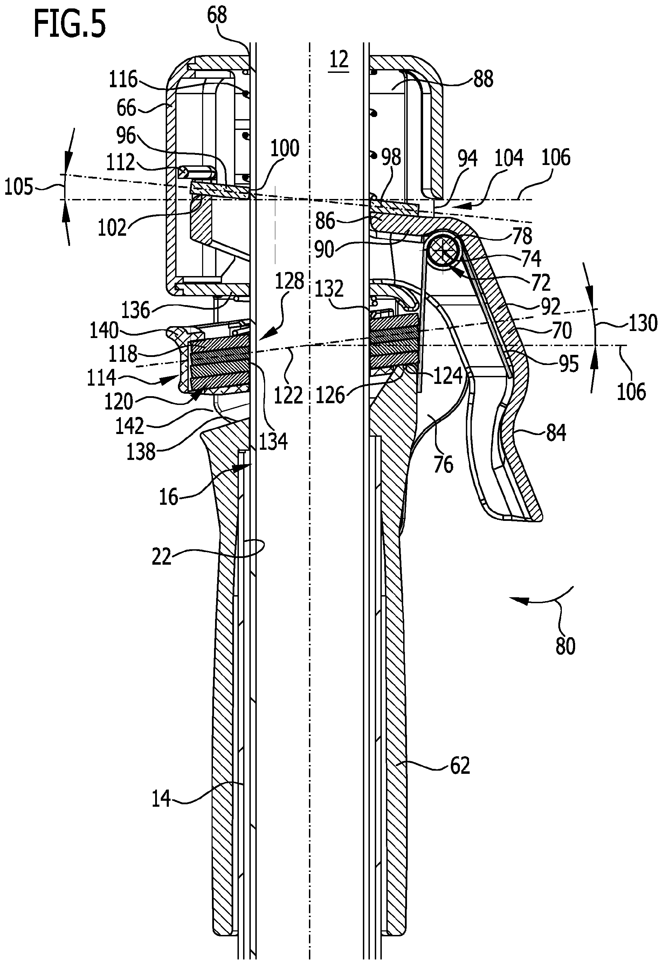

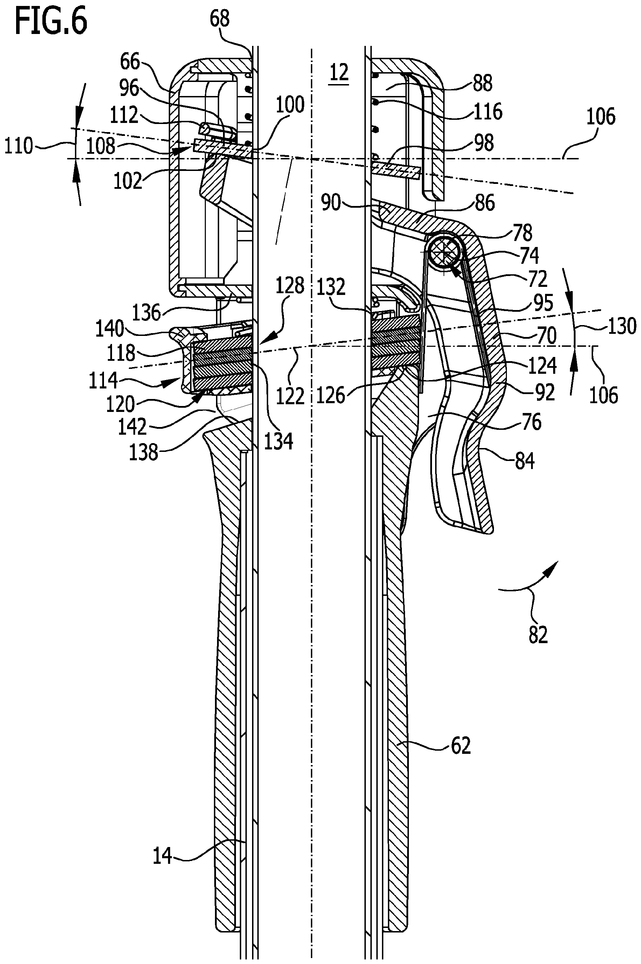

Das Betätigungselement 70 ist als Handgriff ausgebildet. Es weist eine erste Schwenkrichtung 80 (Figur 5) auf, welche einer Zubewegung des Betätigungselements 70 auf den Halter 66 und damit auf den zweiten Stab 14 entspricht. Es weist eine zweite Schwenkrichtung 82 auf (Figur 6), welche eine Gegenrichtung zu der ersten Schwenkrichtung 80 ist und einer Wegschwenkung von dem Halter 66 (und damit dem zweiten Stab 14) entspricht.

Das Betätigungselement 70 ist so angeordnet und ausgebildet, dass ein Bediener, welcher die Stütze 10 an dem Handgriff 62 fasst, das Betätigungselement 70 in seiner Schwenkbewegung insbesondere in der ersten Schwenkrichtung 80 mit der gleichen Hand betätigen kann und dabei insbesondere mit dem Zeigefinger oder dem Daumen betätigen kann, je nachdem wie der Bediener den Handgriff hält.

Das Betätigungselement 70 weist insbesondere eine Fingeranlage-Mulde 84 auf, in welche bei bestimmungsgemäßem Gebrauch und beim Fassen des Handgriffs 62 mit einer Hand ein Bereich des Daumen-Sattelgelenks oder der Zeigefingerspitze der gleichen Hand anlegbar ist. (Es wird dabei von einer Durchschnitthandgröße ausgegangen.)

Das Betätigungselement 70 wirkt auf ein Hebelelement 86, welches an dem Halter 66 angeordnet ist und dabei insbesondere in einem Innenraum 88 des Halters 66 angeordnet ist. Der Halter 66 bildet dann ein Gehäuse für das Hebelelement 86.

Bei dem gezeigten Ausführungsbeispiel ist das Hebelelement 86 an dem Betätigungselement 70 gebildet. Das Betätigungselement 70 weist dazu ein Querelement 90 auf, welches mit einem Längselement 92, an welchem die Fingeranlage-Mulde 84 gebildet ist, verbunden ist und insbesondere einstückig verbunden ist.

Insbesondere ist die Welle 78 an einem Übergangsbereich von dem Längselement 92 zu dem Querelement 90 positioniert.

Der Halter 66 weist eine Öffnung 94 auf, sodass das Längselement 92 außerhalb des Halters 66 positionierbar ist und das Querelement 90 in dem Innenraum 88 des Halters 66 positioniert ist, wobei das Querelement 90 mit dem Längselement 92 verbunden ist.

Durch die Verbindung des Längselements 92 mit dem Querelement 90 bewirkt eine Schwenkbewegung des Betätigungselements 70 eine entsprechende Schwenkbewegung des Hebelelements 86.

Das Betätigungselement 70 ist bei einer Ausführungsform über eine (erste) Federeinrichtung 95 an dem Halter 66 abgestützt. Diese erste Federeinrichtung 95 ist so angeordnet und ausgebildet, dass eine Federkraft der ersten Federeinrichtung 95 bestrebt ist, das Betätigungselement 70 um die Schwenkachse 74 in der zweiten Schwenkrichtung 82 bis zu einem entsprechenden Anschlag zu verschwenken. Um das Betätigungselement 70 in der ersten Schwenkrichtung 80 verschwenken zu können, muss die Federkraft der ersten Federeinrichtung 95 überwunden werden.

Die erste Federeinrichtung 95 ist beispielsweise durch ein entsprechendes elastisches Element gebildet, welches sich an dem Halter 66 und beispielsweise an einer Außenseite des Halters 66 und an einer zugewandten Innenseite des Längselements 92 abstützt.

In dem Innenraum 88 des Halters 66 ist (mindestens) ein Schubelement 96 angeordnet. Dieses Schubelement 96 ist plattenförmig ausgebildet. (Es ist als "Plättchen" ausgebildet.) Es weist eine Mittelebene 98 auf.

Das Schubelement 96 ist beispielsweise ein Blechelement.

Das Schubelement 96 hat eine durchgehende Ausnehmung 100. Durch diese ist der erste Stab 12 durchgetaucht. Das Hebelelement 86 wirkt auf das Schubelement 96. Es ist an eine Seite 102 des Schubelements 96 anlegbar, welche dem zweiten Anlageelement 46 zugewandt ist.

Das Schubelement 96 weist eine Grundstellung (oder einen Grundstellungsbereich mit mehreren Grundstellungen) auf, welche in Figur 5 gezeigt ist. In dieser Grundstellung 104 (Ausgangsstellung) ist das Schubelement 96 so positioniert, dass der erste Stab 12 durch die Öffnung 94 frei verschiebbar ist, das heißt das Schubelement 96 behindert die Verschieblichkeit des ersten Stabs 12 nicht. Eine zusätzliche Sperreinrichtung 114 kann aber diese Beweglichkeit sperren.

Die Grundstellung 104 ist insbesondere eine Stellung, bei welcher die Mittelebene 98 des Schubelements 96 in einem zweiten spitzen Winkel 105 zu einer senkrechten Ebene 106 zu der ersten Verschiebungsrichtung 18 orientiert ist. Bei dem in Figur 5 gezeigten Ausführungsbeispiel liegt der zweite spitze Winkel bei circa 5°.

Das Schubelement 96 weist ferner eine Vorschubstellung (oder einen Vorschubstellungsbereich mit mehreren Vorschubstellungen) 108 auf. Eine entsprechende Vorschubstellung ist in Figur 6 gezeigt. In der Vorschubstellung 108 ist das Schubelement 96 bezogen auf seine Mittelebene 98 in einem ersten spitzen Winkel 110 zu der senkrechten Ebene 106 orientiert. Das Schubelement 96 ist an dem ersten Stab 12 fixiert insbesondere durch Verklemmung. Durch den ersten spitzen Winkel 110 wird eine Verklemmung des ersten Stabs 12 in der Öffnung 94 mit dem Schubelement 96 bewirkt.

Der erste spitze Winkel 110 ist größer als der zweite spitze Winkel 105.

Bei dem in Figur 6 gezeigten Ausführungsbeispiel liegt der erste spitze Winkel 110 bei circa 10°.

Bei einem Ausführungsbeispiel ist an dem Schubelement 96 der Seite 102 gegenüberliegend ein Führungselement 112 angeordnet, welches mit dem Schubelement 96 beweglich ist. Das Führungselement 112 dient zur Führung des Schubelements 96 in dem Halter 66.

Über das Hebelelement 86 und damit über das Betätigungselement 70 ist das Schubelement 96 von seiner Grundstellung 104 in die Vorschubstellung 108 bringbar. Durch Schwenkung des Betätigungselements 70 in der ersten Schwenkrichtung 80 (unter Überwindung der Federkraft der ersten Federeinrichtung 95) übt das Hebelelement 86 an der Seite 102 eine Kraft auf das Schubelement 96 aus, welche eben den Übergang in die Vorschubstellung 108 bewirkt (Figur 6). Die Dimensionierung ist derart, dass eine weitere Zuschwenkung in der ersten Schwenkrichtung 80 eine Translationsbewegung des

Schubelements 96 in der ersten Verschiebungsrichtung 18 bewirkt. Dadurch wird der erste Stab 12, welcher mit dem Schubelement 96 verklemmt ist, gegenüber dem zweiten Stab 14 in der ersten Verschiebungsrichtung 18 verschoben. Die Verschiebungsdistanz in der ersten Verschiebungsrichtung 18 ist dabei durch die entsprechende Ausbildung des Hebelelements 86 und der Anordnung des Schubelements 96 vorgegeben.

Wenn das Betätigungselement 70 losgelassen wird, dann schwenkt das Betätigungselement 70 zurück in der zweiten Schwenkrichtung 82 und die Kraftausübung des Hebelelements 86 auf das Schubelement 96 wird beendet. Der erste Stab 12 bleibt dabei aufgrund einer von dem Schubelement 96 getrennten und insbesondere beabstandeten Sperreinrichtung 114 in seiner zuvor erreichten Verschiebungsposition.

Das Schubelement 96 kann über seine Öffnung 94 in seine Grundstellung 104 zurückfallen.

Dieses Zurückfallen kann durch eine zweite Federeinrichtung 116 unterstützt sein, welche in dem Innenraum 88 des Halters 66 angeordnet ist und auf das Schubelement 96 wirkt. Die zweite Federeinrichtung 116 ist so angeordnet und ausgebildet, dass sie bestrebt ist, das Schubelement 96 in seine Grundstellung 104 zu bringen.

Die zweite Federeinrichtung 116 umfasst beispielsweise eine Spiralfeder, welche den ersten Stab 12 umgibt und dabei in dem Innenraum 88 des Halters 66 angeordnet ist.

Wenn das Betätigungselement 70 durch die Federkraft der ersten Federeinrichtung 95 in der zweiten Schwenkrichtung 82 in seine Ausgangsstellung geschwenkt wird und dabei die Kraftausübung des Hebelelements 86 auf das Schubelement 96 verringert und gegebenenfalls ganz aufgehoben wird, dann kann die zweite Federeinrichtung 116 das Schubelement 96 aus der Vorschubstellung 108 in die Grundstellung 104 drücken.

Die Sperreinrichtung 114 umfasst eine Mehrzahl von Sperrelementen 118. Die Sperrelemente 118 sind insbesondere in einem Sperrelementpaket 120 fest miteinander verbunden oder lose gestapelt angeordnet. Ein Sperrelement 118 kann gleich ausgebildet sein wie ein Schubelement 96.

Ein Sperrelement 118 ist insbesondere ein Blechteil, welches plattenförmig mit einer entsprechenden Mittelebene 122 ist.

Wenn die Stütze 10 an einer Anwendung zwischen der ersten Wandung und der zweiten Wandung eingespannt ist, muss das Sperrelementpaket 120 eine entsprechende Last tragen. Deshalb ist es vorteilhaft, wenn eine Mehrzahl von Sperrelementen 118 in dem Sperrelementpaket 120 vorgesehen ist. (Für die Lasttragung bei der Einspannung hat das Schubelement 96 keine Wirkung; es wird nur benötigt für einen Antrieb der Verschiebungsbewegung des ersten Stabs 12 zu dem zweiten Stab 14 in der ersten Verschiebungsrichtung 18.)

An dem Halter 66 ist eine Anlage 124 für das Sperrelementpaket 120 gebildet. Diese Anlage 124 stellt einen Abstützpunkt für das Sperrelementpaket 120 bereit. An der Anlage 124 ist eine Schwenkachse 126 angeordnet. Die Schwenkachse 126 ist durch einen Anlagebereich des Sperrelementpakets 120 an der Anlage 124 gebildet.

Die Anlage 124 ist bezogen auf den ersten Stab 12 an einer dem Führungselement 112 gegenüberliegenden Seite angeordnet.

In einer Sperrstellung 128 sperrt das Sperrelementpaket 120 die Verschiebung in der zweiten Verschiebungsrichtung 20.

Die Sperrstellung 128 ist dadurch gegeben, dass die entsprechenden Mittelebenen 122 der Sperrelemente 118 in einem spitzen Winkel 130 zu der senkrechten Ebene 106 stehen. Der spitze Winkel 130 weist dabei ein entgegengesetztes Vorzeichen zu dem ersten spitzen Winkel 110 und dem zweiten spitzen Winkel 105 auf. In der Klemmstellung des Schubelements 96 weist dieses also bezogen auf die senkrechte Ebene 106 eine entgegengesetzte Orientierung zu einem Sperrelement 118 in dessen Sperrstellung 128 auf.

Das Sperrelementpaket 120 ist durch eine (dritte) Federeinrichtung 132 beaufschlagt. Diese dritte Federeinrichtung 132 ist bestrebt, das Sperrelementpaket 120 in die Sperrstellung 128 zu drücken, sodass es mit dem jeweiligen spitzen Winkel 130 zu der senkrechten Ebene 106 orientiert ist.

Die Sperrelemente 118 weisen jeweilige durchgehende Ausnehmungen 134 auf, durch welche der erste Stab 12 durchgetaucht ist. In der Sperrstellung 128 ist über die Ausnehmung 134 ein Sperrelement 118 mit dem ersten Stab 12 verklemmt. Die Sperrstellung 128 ist folglich eine Klemmstellung der Sperrelemente 118 des Sperrelementpakets 120.

Die dritte Federeinrichtung 132, welche beispielsweise eine Spiralfeder umfasst und sich an einer Wandung 136 des Halters 66 abstützt, welche quer zu der ersten Verschiebungsrichtung 18 orientiert ist und eine Abgrenzung zu einem Bereich in dem Innenraum 88 darstellt, in welchem das Querelement 90 (das Hebelelement 86) angeordnet ist, ist bestrebt, das Sperrelementpaket 120 in seine Sperrstellung 128 zu drücken und damit in dem spitzen Winkel 130 zu der senkrechten Ebene 106 zu orientieren.

An dem Halter 66 ist ein Anschlag 138 angeordnet, welcher der Anlage 124 gegenüberliegt, und welcher entsprechend den Bewegungsspielraum des Sperrelementpakets 120 begrenzt.

Ohne Bedienereinfluss verhindert das Sperrelementpaket 120 der Sperreinrichtung 114, dass sich der erste Stab 12 in der zweiten Verschiebungsrichtung 20 relativ zu dem zweiten Stab 14 bewegen kann.

Die Sperrstellung 128 bewirkt, dass das Sperrelementpaket 120 mit dem ersten Stab 12 verklemmt ist und dadurch die Verschiebung des ersten Stabs 12 in der zweiten Verschiebungsrichtung 20 gesperrt ist.

Wenn das Betätigungselement 70 in der ersten Schwenkrichtung 80 verschwenkt wird und dabei das Schubelement 96 in die Vorschubstellung 108 gebracht wird und in der ersten Verschiebungsrichtung 18 verschoben wird, dann wird aufgrund der Kraftausübung auf den ersten Stab 12 das Sperrelementpaket 120 verschwenkt und zwar derart, dass der spitze Winkel 130 verkleinert wird. Dadurch wird die Klemmstellung (die Sperrstellung 128) aufgehoben und der erste Stab 12 kann relativ zu dem zweiten Stab 14 nach oben verschoben werden, das heißt der erste Stab 12 kann in den entsprechenden Ausnehmungen der Sperrelemente 118 verschoben werden. Eine Bewegung des ersten Stabs 12 in der zweiten Verschiebungsrichtung 20 ist durch die Bewegung in der ersten Verschiebungsrichtung 18 gesperrt. Wenn unter der Wirkung der ersten Federeinrichtung 95 das Betätigungselement 70 mit der zweiten Schwenkrichtung 82 verschwenkt wird, gehen die Sperrelemente 118 zurück in ihre Sperrstellung 128 und eine Verschiebung des ersten Stabs 12 in der zweiten Verschiebungsrichtung 20 ist gesperrt.

Die Sperreinrichtung 114 ist als lösbare Sperreinrichtung ausgebildet. An dem Sperrelementpaket 120 ist ein Lösegriff 140 angeordnet. Dieser Lösegriff 140 ist an einer Seite angeordnet, welche bezogen auf den ersten Stab 12 dem Längselement 92 des Betätigungselements 70 gegenüberliegend ist; der erste Stab 12 liegt zwischen dem Lösegriff 140 und dem Betätigungselement 70 und dabei insbesondere dem Längselement 92 des Betätigungselements 70.

Wie oben erwähnt, ist das Sperrelementpaket 120 über die Anlage 124 mit der Schwenkachse 126 schwenkbar an dem Halter 66 angeordnet. Durch den Lösegriff 140 kann von außen auf das Sperrelementpaket 120 zugegriffen werden und durch eine entsprechende Schwenkung unter Verkleinerung des spitzen Winkels 130 die Sperrstellung 128 (die Klemmstellung) der Sperrelemente 118 an dem ersten Stab 12 aufgehoben werden.

Durch Aufhebung der Sperrstellung 128 kann dann der erste Stab 12 relativ zu dem zweiten Stab 14 in der zweiten Verschiebungsrichtung 20 (und in der ersten Verschiebungsrichtung 18) verschoben werden.

Wenn bezogen auf die Gravitationsrichtung der erste Stab 12 oberhalb des zweiten Stabs 14 angeordnet ist, dann kann bei Aufhebung der Sperrstellung unter Wirkung der Gravitationskraft der erste Stab 12 in den Eintauchbereich 22 des zweiten Stabs 14 fallen.

Der Halter 66 weist im Bereich des Lösegriffs 140 eine Öffnung oder Ausnehmung 142 auf, um einen entsprechenden Zugriff zu ermöglichen.

Der Lösegriff 140 ist insbesondere als Löseschalter ausgebildet, welcher zwei ausgezeichnete Stellungen aufweist, nämlich zum einen eine Stellung, in welcher die Sperrstellung 128 erreicht ist. Diese Stellung wird automatisch über die dritte Federeinrichtung 132 erzeugt. Ferner weist er eine Freigabestellung auf, welche dadurch erreicht wird, dass über den Lösegriff 140 das Sperrelementpaket 120 zu der Wandung 136 hin verschwenkt wird.

Diese ausgezeichneten Stellungen sind beispielsweise durch Anschläge definiert.

Der Lösegriff 140 ist insbesondere so angeordnet, dass er durch einen Bediener bedienbar ist, welcher die Stütze 10 an dem Handgriff 62 hält und seinen Zeigefinger oder Daumen an dem Betätigungselement 70 anlegt. Er kann beispielsweise mit dem Daumen oder Zeigefinger auf den Lösegriff wirken, um die Sperrstellung 128 durch eine Verschwenkung entgegen der Federkraft der dritten Federeinrichtung 132 aufheben zu können.

Bei dem in den Figuren 1 bis 7 gezeigten Ausführungsbeispiel ist der Lösegriff 140 zwischen dem Hebelelement 86 und dem zweiten Anlageelement 46 positioniert. In diesem Sinne ist der Lösegriff 140 unterhalb des Hebelelements 86 positioniert. Entsprechend ist das Sperrelementpaket 120 zwischen dem Hebelelement 86 und dem zweiten Anlageelement 46 und in diesem Sinne unterhalb des Hebelelements 86 positioniert.

Bei dieser Ausführungsform kann bei entsprechender Dimensionierung und ausgehend von einer "Durchschnittshand" beispielsweise der Zeigefinger oder Daumen den Lösegriff 140 bedienen, wenn die Hand mit diesem Zeigefinger oder Daumen den Handgriff 62 hält und dabei ist auch noch eine Bedienung des Betätigungselements 70 über den Daumen oder Zeigefinger der gleichen Hand möglich.

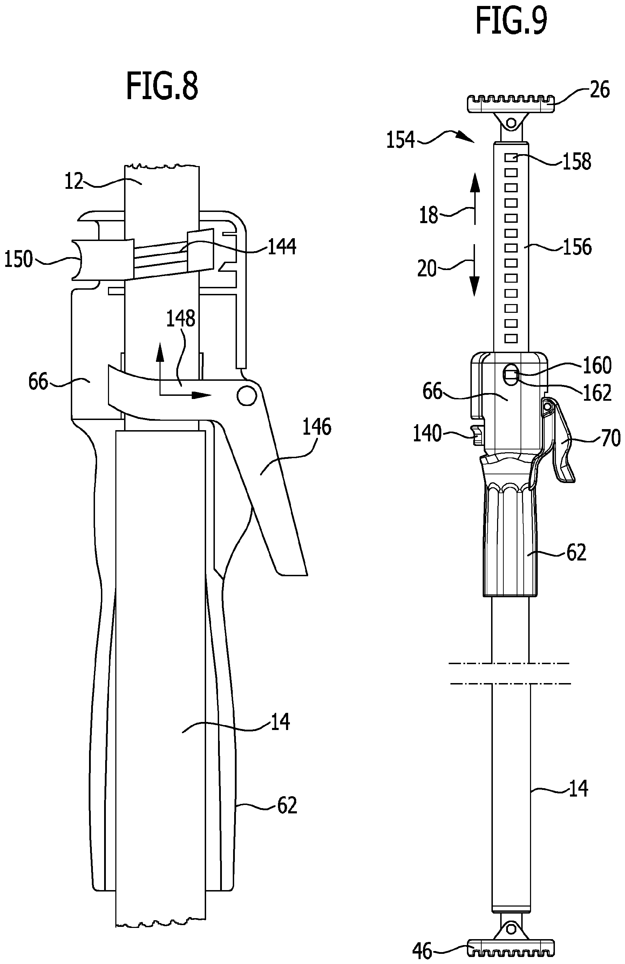

Bei einer alternativen Ausführungsform (Figur 8) ist ein Sperrelementpaket 144 oberhalb eines entsprechenden Betätigungselements 146 mit Hebelelement 148 angeordnet. Das Sperrelementpaket 144 und sein zugeordneter Lösegriff 150 sind dadurch zwischen dem ersten Anlageelement 26 und dem Hebelelement 148 angeordnet.

Ansonsten funktioniert die entsprechende Stütze wie oben anhand der Stütze 10 beschrieben und für gleiche Elemente werden gleiche Bezugszeichen verwendet.

Die beschriebene Anordnung des Lösegriffs 150 oberhalb des Hebelelements 148 und damit in einem größeren Abstand zu dem Handgriff 62 kann vorteilhaft sein, um ein unbeabsichtigtes Lösen einer Sperrstellung des Sperrelementpakets 144 zu verhindern, wenn die entsprechende Stütze an dem Handgriff 62 gehalten wird. Der Lösegriff 150 ist dann bei entsprechender Dimensionierung und bezogen auf übliche Handabmessungen außerhalb einer "normalen" Reichweite beispielsweise des Zeigefingers, das heißt es ist eine besondere Bewegung des Fingers und/oder der Hand notwendig, um einen Lösevorgang zu bewirken.

Ansonsten funktioniert die entsprechende Stütze wie oben beschrieben und das Sperrelementpaket 144 weist die gleiche Funktion auf wie das Sperrelementpaket 120.

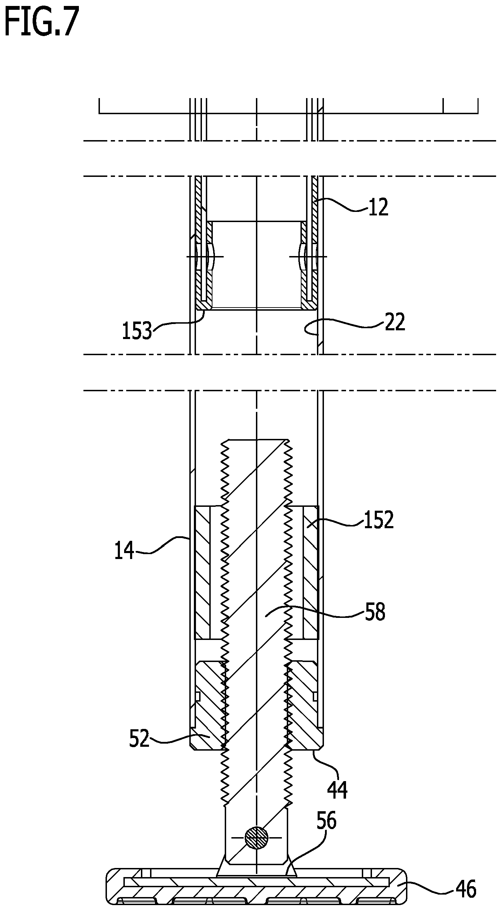

Bei einer Ausführungsform ist in dem Eintauchbereich 22 in der Nähe des Endes 44 oberhalb des Einsatzes 52 eine elastische Anschlageinrichtung 152 angeordnet (Figur 7). Eine Wandung des Einsatzes 52 stellt eine Anlagefläche für die elastische Anschlageinrichtung 152 bereit. Diese ist so angeordnet und ausgebildet, dass sie einen Anschlag des ersten Stabs 12, wenn dieser in den Eintauchbereich 22 des zweiten Stabs 14 fällt, dämpft.

Wenn beispielsweise die Stütze 10 so ausgerichtet ist, dass die zweite Verschiebungsrichtung 20 eine Komponente parallel zur Gravitationsrichtung aufweist, und wenn dann die Sperrstellung 128 des Sperrelementpakets 120 bzw. des Sperrelementpakets 144 aufgehoben wird, dann fällt aufgrund der Schwerkraftwirkung der erste Stab 12 in den Eintauchbereich 22 und schlägt dann an. Durch die elastische Anschlageinrichtung 152 wird dieses Anschlagen gedämpft.

Die elastische Anschlageinrichtung 152 ist beispielsweise durch einen Gummipuffer oder dergleichen ausgebildet.

Insbesondere ist die elastische Anschlageinrichtung 152 als Ringzylinder oder dergleichen ausgebildet, welcher an einem Eintauchbereich 22 angeordnet ist. Beispielsweise ist die erste Anschlageinrichtung 152 über den entsprechenden Stift 58 übergeschoben.

Wenn der erste Stab 12 als Rohr ausgebildet ist, in welchem der Stift 58 teilweise eintauchen kann, dann kann der Stift 58 über die elastische Anschlageinrichtung 152 herausragen (vergleiche Figur 7).

Bei dieser Ausführungsform stößt der erste Stab 12 mit einer Ringfläche 153 an eine entsprechende Ringfläche der Anschlageinrichtung 152 an. Insbesondere stößt der erste Stab 12 dadurch nicht direkt an den Stift 58.

Wenn der erste Stab 12 beispielsweise durch ein Vollmaterial gebildet ist, dann ragt die elastische Anschlageinrichtung 152 über den Stift 58 hinaus.

Bei einem Ausführungsbeispiel einer Stütze 154 (Figur 9) ist ein erster Stab 156 vorgesehen, welcher grundsätzlich gleich wie der erste Stab 12 ausgebildet ist, wobei der erste Stab 156 als Rohr ausgebildet ist, bei dem längs der ersten Verschiebungsrichtung 18 eine Mehrzahl von beabstandeten Ausnehmungen 158 angeordnet sind. Eine entsprechende Ausnehmung 158 ist beispielsweise als Öffnung in einen Innenraum des entsprechenden Rohrs ausgebildet.

Es ist grundsätzlich auch möglich, dass eine Ausnehmung nur als Vertiefung ausgebildet ist, insbesondere wenn der erste Stab 156 als Vollmaterialkörper ausgebildet ist.

Für gleiche Elemente wie bei der Stütze 10 werden für die Stütze 154 gleiche Bezugszeichen verwendet.

An dem Halter 66 ist ein Eingreifelement 160 angeordnet, welches in eine entsprechende Ausnehmung 158 eintauchbar ist. Wenn das Eingreifelement 160 in eine Ausnehmung 158 eingetaucht ist, dann ist die Bewegung des ersten Stabs 156 zu dem zweiten Stab 14 in der zweiten Verschiebungsrichtung 20 durch Formschluss gesperrt.

Durch die Kombination einer Ausnehmung 158 und eines in diese eintauchende Eingreifelements 160 lässt sich also eine Formschlussfixierung zwischen dem ersten Stab 156 und dem zweiten Stab 14 erreichen. (Bei der Stütze 10 erfolgt durch das Sperrelementpaket 120 bzw. 144 im Wesentlichen eine Kraftschlussfixierung zwischen dem ersten Stab 12 und dem zweiten Stab 14, wenn die Sperrstellung erreicht ist.)

In seiner einfachsten Ausführung weist der Halter 66 eine Ausnehmung auf und das Eingreifelement 160 ist ein Stift, welcher durch diese Öffnung hindurch in eine entsprechende Ausnehmung 158 des ersten Stabs 156 einsteckbar ist, um die formschlüssige Fixierung (bezogen auf die erste Verschiebungsrichtung 18 und die zweite Verschiebungsrichtung 20) zu bewirken.

Es kann vorgesehen sein, dass an dem Halter 66 ein Schalter 162 angeordnet ist, welcher auf das Eingreifelement 160 wirkt, und mit dem ein Eintauchen eines Eingreifelements 160 in eine entsprechende ausgerichtete Ausnehmung 158 und auch ein Austauchen möglich ist. Beispielsweise ist das Eingreifelement 160 schwenkbar in dem Innenraum 88 des Halters 66 angeordnet und durch den Schalter wird eine entsprechende Schwenkbewegung zum Eintauchen bewirkt bzw. es kann ein Austauchen durch eine Rückschwenkbewegung bewirkt werden.

Insbesondere ist dann eine Federbeaufschlagung vorgesehen, wobei die Federkraft so wirkt, dass ohne Kraftausübung an dem Schalter 162 das Eingreifelement 160 ausgetaucht ist und über den Schalter 162 explizit eine Kraft aufgebracht werden muss, um ein Eintauchen zu bewirken.

Ansonsten funktioniert die Stütze 154 wie die Stütze 10.

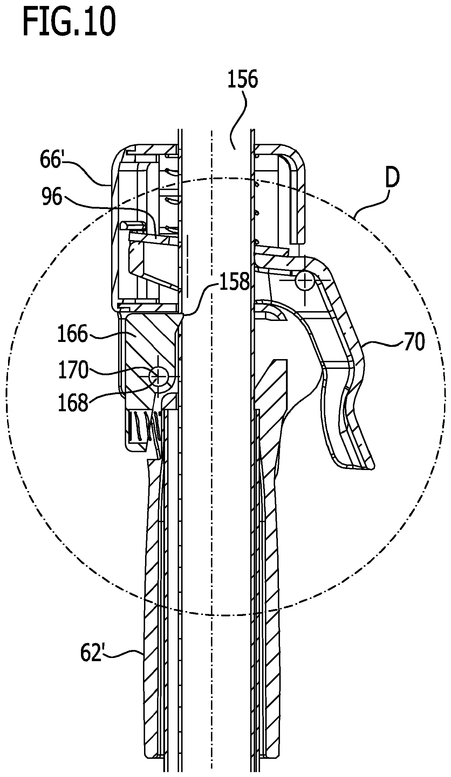

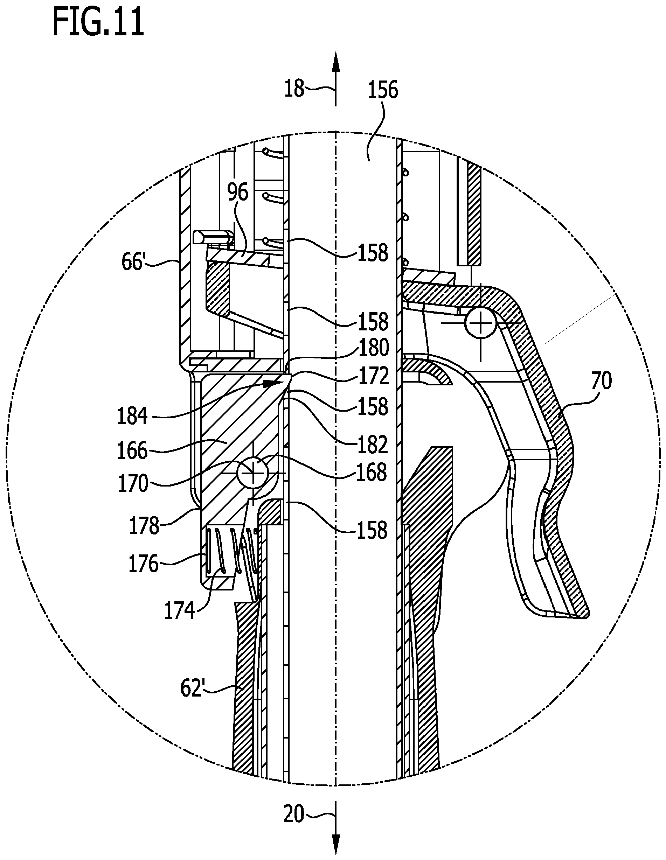

Bei einer konkreten Ausführungsform (Figuren 10, 11) ist ein Halter 66' vorgesehen, an welchem ein Schubelement entsprechend dem Schubelement 96 bei der Stütze 10 und ein Betätigungselement entsprechend dem Betätigungselement 70 der Stütze 10 vorgesehen sind. Für diese Elemente werden die gleichen Bezugszeichen wie bei der Stütze 10 verwendet.

Sie sind grundsätzlich auf die gleiche Weise angeordnet wie bei dem Halter 66 der Stütze 10 und funktionieren auf die gleiche Weise.

Mit dem Halter ist ein Handgriff 62' verbunden. Zwischen dem Halter 66' und dem Handgriff 62' ist schwenkbar beispielsweise an dem Handgriff 62' (oder dem Halter 66') ein Eingreifelement 166 angeordnet. Dieses Eingreifelement 166 ist an einem Schwenklager 168 gehalten. Das Schwenklager ermöglicht eine Schwenkung um eine Schwenkachse 170, welche senkrecht zu einer Verschiebungsrichtung des ersten Stabs 156 zu einem entsprechenden zweiten Stab ist.

Das Eingreifelement 166 weist eine Nase 172 als Sperrelement auf. Diese Nase 172 ist in eine entsprechende Ausnehmung 158 des ersten Stabs 156 eintauchbar beziehungsweise austauchbar. Eine entsprechende Schwenkbewegung des Eingreifelements 166 bewirkt dabei ein Eintauchen beziehungsweise ein Austauchen.

Das Eingreifelement 166 ist über eine Federeinrichtung 174 an dem Handgriff 62' abgestützt.

Die Federeinrichtung 174, welche insbesondere eine oder mehrere Spiralfedern umfasst, ist dabei an dem Eingreifelement 166 in einem Bereich 176 abgestützt, welcher abgewandt zu einem Bereich ist, in welchem die Nase 172 positioniert ist.

Die Federeinrichtung 174 übt eine Druckkraft auf das Eingreifelement 166 aus, welche die Nase 162 in Richtung des ersten Stabs 156 drückt. Wenn die Nase 172 an einer Ausnehmung 158 liegt, wird dadurch die Nase 172 in die Ausnehmung 158 eingetaucht. Es erfolgt eine Verrastung.

Zum Austauchen der Nase 172 aus einer entsprechenden Ausnehmung 158 muss die Kraft der Federeinrichtung 174 überwunden werden. Ein Bediener muss dazu das Eingreifelement 166 entsprechend verschwenken, um eine Wegbewegung der Nase 172 von dem ersten Stab 156 zu ermöglichen.

Entsprechend ist das Eingreifelement 166 als Schalter 178 ausgebildet.

Der Schalter 178 ist dabei insbesondere so ausgebildet, dass er mit einer Hand bedienbar ist und dabei mit der Hand bedienbar ist, welche den Handgriff 62' hält und dabei auf das Betätigungselement 70 wirkt.

Ohne Bedienereingriff bewirkt die Federeinrichtung 174, wenn die Nase 172 im Bereich einer Ausnehmung 158 liegt, dass die Nase 172 in die Ausnehmung 158 eingetaucht wird. Es ergibt sich dadurch eine automatische Fixierung.

Zum Austauchen ist ein aktiver Eingriff notwendig.

Wenn ein Bediener das Eingreifelement 166 loslässt, dann bewirkt die Federeinrichtung 174 ein Zuschwenken und, wenn sich der erste Stab 156 bewegt, ein Eintauchen der Nase 172 in eine entsprechende Ausnehmung 158, welche gewissermaßen an der Nase 172 vorbeigeführt ist.

Es ergibt sich dadurch eine automatische Verriegelung.

Bei dem in den Figuren 10 und 11 gezeigten Ausführungsbeispiel bildet das Eingreifelement 166 auch eine Sperreinrichtung. Eine zusätzliche Sperreinrichtung insbesondere über ein Sperrelementpaket wie das Sperrelementpaket 120 ist nicht vorgesehen.

Es ist jedoch auch möglich, dass das Eingreifelement 166 mit einer zusätzlichen Sperreinrichtung mit einem Sperrelementpaket 120 kombiniert wird.

Beim Bedienen einer entsprechenden Stütze löst ein Bediener insbesondere beim Zuschwenken des Betätigungselements 70 auf den ersten Stab 156 durch Eingriff an dem Schalter 178 die Sperrung über die Nase 172, um eine Verschiebung des ersten Stabs 156 in der Verschiebungsrichtung 18 zu ermöglichen.

Bei einem Ausführungsbeispiel ist dabei die Nase 172 so ausgebildet, dass sie bei einer Bewegung des ersten Stabs 156 aus der entsprechenden Ausnehmung 158, in welche sie eingetaucht ist, automatisch herausgeführt wird.

Insbesondere weist die Nase 172 eine steile Flanke 180 und eine mit dieser verbundenen schräge Flanke 182 auf. Die steile Flanke 180 ist dabei bezogen auf die Verschiebungsrichtung 18 dem ersten Anlageelement 26 nächstliegend. Sie ist insbesondere senkrecht zu der ersten Verschiebungsrichtung 18 orientiert. Die schräge Flanke 182 bildet eine schiefe Ebene.

Wenn dann die Nase 172 in eine Ausnehmung 158 eingetaucht ist, dann kann durch eine Bewegung des ersten Stabs 156 über das Schubelement 96 aufgrund der schrägen Flanke 182 (als schiefe Ebene) ein Austauchen der Nase 172 aus der Ausnehmung 158 bewirkt werden, um eben die Verschiebung in der ersten Verschiebungsrichtung 18 zu ermöglichen.

Ein Austauchen, wenn der erste Stab 156 in der zweiten Verschiebungsrichtung 20 sich bewegt beziehungsweise bewegt wird, ist nur durch aktiven Eingriff des Bedieners an dem Eingreifelement 166 möglich, das heißt es ist ein aktives Herausschwenken der Nase 172 aus der entsprechenden Ausnehmung 158 notwendig.

Die bei einer Bewegung in der ersten Verschiebungsrichtung 18 (verursacht durch das Betätigungselement 70) auf die schräge Flanke 182 ausgeübte Kraft bewirkt eine Verschwenkung des Eingreifelements 166 entgegen der Kraft der Federeinrichtung 174, welches zu einem Austauchen der Nase 172 aus der entsprechenden Ausnehmung 158 führt.

Es ergibt sich dadurch eine Stütze, welche einhändig bedienbar ist und bei welcher eine entsprechende Sperreinrichtung 184 durch das Eingreifelement 166 gebildet ist, welches eine Sperrung in der zweiten Verschiebungsrichtung 20 bewirkt.

Beim Hochfahren des ersten Stabs 156 in der ersten Verschiebungsrichtung 18 wird zwischen benachbarten Ausnehmungen 158 die Nase an einer Außenseite des ersten Stabs 156 "entlanggeschleift". Wenn die Nase 172 über einer Ausnehmung 158 liegt, dann taucht sie aufgrund der Kraft der Federeinrichtung 174 ein und bewirkt in dieser Stellung eine Sperrung in der zweiten Verschiebungsrichtung 20 durch Verrastung. Es ist eine Raststellung hergestellt.

Wenn eine weitere Verschiebung in der ersten Verschiebungsrichtung 18 erfolgt (durch weitere beziehungsweise erneute Betätigung des Betätigungselements 70), dann kann die Nase 172 wie unten beschrieben wieder austauchen usw.

Ansonsten funktioniert die Stütze wie oben beschrieben.

Die erfindungsgemäße Stütze 10 bzw. 154 funktioniert wie folgt:
Um eine Abstützung an einer Anwendung zwischen einer ersten Wandung und einer zweiten Wandung, wobei die Stütze 10 bzw. 154 zwischen der ersten Wandung und der zweiten Wandung positioniert ist, zu bewirken, fasst ein Bediener die Stütze 10 bzw. 154 an dem Handgriff 62.

Die Stütze 10 bzw. 154 weist eine Betätigungseinrichtung 164 auf, welche das Betätigungselement 70, das Hebelelement 86, das Schubelement 96 und die Sperreinrichtung 114 umfasst. Die Betätigungseinrichtung 164 ist über das Betätigungselement 70 bedienbar, wenn die Stütze 10 bzw. 154 an dem Handgriff 62 umfasst ist. Insbesondere ist das Betätigungselement 70 dann über den Zeigefinger oder Daumen der Haltehand bedienbar. Der Bediener kann dadurch die Stütze 10 als Ganzes an dem Handgriff 62 halten. Er kann die Betätigungseinrichtung 164 betätigen und dadurch den ersten Stab 12 in der ersten Verschiebungsrichtung 18 verschieben. Er kann dadurch ein Anlegen des ersten Anlageelements 26 und des zweiten Anlageelements 46 an der entsprechenden Wandung bewirken. Er stellt eine Vorspannung ein.

Die Verschiebung des ersten Stabs 12 in der ersten Verschiebungsrichtung 18 erfolgt dabei durch ein Pumpen an der Betätigungseinrichtung 164. Ein Bediener bewegt das Betätigungselement 70 in der ersten Schwenkrichtung 80 aktiv. Dadurch erfolgt ein Übergang des Schubelements 96 von seiner Grundstellung 104 in eine Vorschubstellung 108 an dem ersten Stab 12. Der erste Stab 12 wird durch die Schwenkbewegung um eine bestimmte Distanz in der ersten Verschiebungsrichtung 18 aufgrund entsprechender Verschiebung des mit ihm verklemmten Schubelements 96 mitgenommen.

Wenn der Bediener keine Kraft auf das Betätigungselement 70 ausübt, dann stellt die Kraft der ersten Federeinrichtung 95 das Betätigungselement 70 durch Verschwenkung in der zweiten Schwenkrichtung 82 zurück. Durch wiederholtes "Pumpen" wird dadurch der erste Stab 12 der Stütze 10 bzw. 154 schrittweise bezogen auf den zweiten Stab 14 ausgefahren.

Wenn das erste Anlageelement 26 und das zweite Anlageelement 46 an der entsprechenden Wandung anliegen, kann durch Drehung der Stütze 10 und dabei durch Drehung der Kombination aus erstem Stab 12 und zweitem Stab 14 eine erhöhte Stützkraft aufgebracht werden. Diese Kraft wird über das erste Gewinde 32 und das zweite Gewinde 48 eingebracht.

Über diese Drehung und über die Gewinde 32, 48 kann eine hohe Kraft eingebracht werden, welche beispielsweise in der Größe von 4000 N liegt.

Es ist dabei eine Einhandbedienung möglich. Durch den entsprechenden Pumpvorgang kann für eine Anlage des ersten Anlageelements 26 und des zweiten Anlageelements 46 gesorgt werden und die eigentliche hohe Kraft wird dann durch Drehung der Kombination aus erstem Stab 12 und dem zweiten Stab 14 mit den gegensinnigen Gewinden 32, 48 eingebracht.

Es ergibt sich dadurch ein hoher Bedienkomfort, da wie erwähnt eine Einhandbedienung möglich ist.

Eine Verschiebung des ersten Stabs 12 zu dem zweiten Stab 14 in der zweiten Verschiebungsrichtung 20 ist möglich, wenn die Sperrstellung 128 in der Sperreinrichtung 114 durch entsprechende Einwirkung auf den Lösegriff 140 gelöst wird.

Beim Einfahren des ersten Stabs 12 in den zweiten Stab 14 und insbesondere beim Herunterfallen des ersten Stabs 12 in dem zweiten Stab 14 aufgrund Einwirkung der Gravitationskraft verhindert die elastische Anschlageinrichtung 152 ein hartes Anschlagen. Das Anschlagen wird durch die elastische Anschlageinrichtung 152 gedämpft. Es ergibt sich ein hoher Bedienkomfort.

Das Lösen der Sperreinrichtung 114 ist insbesondere ebenfalls durch die gleiche Hand bedienbar, welche den Handgriff 62 hält und beispielsweise über die zuvor die Pumpbewegung an der Betätigungseinrichtung 164 durchgeführt wurde.

Durch die erfindungsgemäße Stütze 10 bzw. 154 lässt sich einerseits eine Einhandbedienung realisieren. Durch den Pumpvorgang lässt sich ein Anlegen des ersten Anlageelements 26 und des zweiten Anlageelements 46 mit einer Vorspannung an der Anwendung erreichen. Die endgültige Kraft wird dann durch Drehung eingebracht. Andererseits lassen sich dann über die Drehung große Kräfte einbringen.

Es ergibt sich dadurch eine hohe Belastbarkeit der Stütze 10 bzw. 154 bei hohem Bedienkomfort. Ein Bediener hat im Wesentlichen die andere Hand frei, um beispielsweise die Anwendung bzw. Teile der Anwendung zu halten.

Das Sperrelementpaket 120 bzw. 144 sichert in einer eingespannten Stellung die Position des ersten Stabs 12 an dem zweiten Stab 14 bezogen auf die zweite Verschiebungsrichtung 20.

Bei der Stütze 154 kann diese Stellung durch eine Formschlussverbindung des Eingreifelements 160 an einer entsprechenden Ausnehmung 158 gesichert werden.

Bei der Stütze 154, wenn entsprechend das Eingreifelement 160 in eine Ausnehmung 158 eingreift, kann durch entsprechende Drehung der Kombination aus erstem Stab 156 und dem zweiten Stab 14 eine erhöhte Stützkraft eingestellt werden bzw. eine weitere Einspannung erreicht werden.

Erfindungsgemäß wird eine Stütze bereitgestellt, welche beispielsweise als Deckenstütze verwendbar ist, die bei hoher Kraftbelastbarkeit eine Einhandbedienung ermöglicht. Es ist eine hohe Kraftübertragung an die Anwendung möglich und es ist ferner auch eine hohe Belastungskraft an der Stütze 10 bzw. 154 möglich.

Die Stütze, welche die Betätigungseinrichtung gemäß den Figuren 10 und 11 aufweist, funktioniert grundsätzlich gleich wie oben. Dort ist die Sperreinrichtung 184 alleine über das Eingreifelement 166 gebildet. Ein Sperrelementpaket wie das Sperrelementpaket 144 beziehungsweise 120 ist nicht vorgesehen, wobei es jedoch auch zusätzlich verwendet werden kann.

Die Funktionsweise einer entsprechenden Stütze mit Eingreifelement 166 wurde oben bereits bezüglich der Sperrung für eine Verschiebung in der zweiten Verschiebungsrichtung 20 beschrieben.

Bezüglich der Verschiebung in der ersten Verschiebungsrichtung 18 funktioniert eine solche Stütze gleich wie beispielsweise die Stütze 10.

### Bezugszeichenliste

- 10: Stütze
- 12: Erster Stab
- 14: Zweiter Stab
- 16: Führungseinrichtung
- 18: Erste Verschiebungsrichtung
- 20: Zweite Verschiebungsrichtung
- 22: Eintauchbereich
- 24: Ende
- 26: Erstes Anlageelement
- 28: Platte
- 30: Profil
- 32: Erstes Gewinde
- 34: Lascheneinrichtung
- 36: Stift
- 38: Schwenklager
- 40: Schwenkachse
- 42: Einsatz
- 44: Ende
- 46: Zweites Anlageelement
- 48: Zweites Gewinde
- 52: Einsatz
- 54: Platte
- 56: Lascheneinrichtung
- 58: Stift
- 60: Schwenklager
- 62: Handgriff
- 62': Handgriff
- 64: Hülse
- 66: Halter
- 66': Halter

- 68: Ausnehmung
- 70: Betätigungselement
- 72: Schwenklager
- 74: Schwenkachse
- 76: Rippe
- 78: Welle
- 80: Erste Schwenkrichtung
- 82: Zweite Schwenkrichtung
- 84: Fingeranlage-Mulde
- 86: Hebelelement
- 88: Innenraum
- 90: Querelement
- 92: Längselement
- 94: Öffnung
- 95: Erste Federeinrichtung
- 96: Schubelement
- 98: Mittelebene
- 100: Ausnehmung
- 102: Seite
- 104: Grundstellung
- 105: Zweiter spitzer Winkel
- 106: Senkrechte Ebene
- 108: Vorschubstellung
- 110: Erster spitzer Winkel
- 112: Führungselement
- 114: Sperreinrichtung
- 116: Zweite Federeinrichtung
- 118: Sperrelement
- 120: Sperrelementpaket
- 122: Mittelebene
- 124: Anlage
- 126: Schwenkachse
- 128: Sperrstellung

- 130: Spitzer Winkel
- 132: Dritte Federeinrichtung
- 134: Ausnehmung
- 136: Wandung
- 138: Anschlag
- 140: Lösegriff
- 142: Öffnung
- 144: Sperrelementpaket
- 146: Betätigungselement
- 148: Hebelelement
- 150: Lösegriff
- 152: Elastische Anschlageinrichtung
- 153: Ringfläche
- 154: Stütze
- 156: Erster Stab
- 158: Ausnehmung
- 160: Eingreifelement
- 162: Schalter
- 164: Betätigungseinrichtung
- 166: Eingreifelement
- 168: Schwenklager
- 170: Schwenkachse
- 172: Nase
- 174: Federeinrichtung
- 176: Bereich
- 178: Schalter
- 180: Steile Flanke
- 182: Schräge Flanke
- 184: Sperreinrichtung

## Patentansprüche

1. Stütze, umfassend einen ersten Stab (12; 156), ein erstes Anlageelement (26), welches an dem ersten Stab (12; 156) über ein erstes Gewinde (32) mit einem ersten Gewindesinn gehalten ist, einen zweiten Stab (14), ein zweites Anlageelement (46), welches an dem zweiten Stab (14) über ein zweites Gewinde (48) mit einem zweiten Gewindesinn gehalten ist, wobei der erste Gewindesinn entgegengesetzt zu dem zweiten Gewindesinn ist, und eine Führungseinrichtung (16), durch welche der erste Stab (12; 156) verschieblich an dem zweiten Stab (14) geführt ist, wobei an dem zweiten Stab (14) ein Handgriff (62; 62') angeordnet ist, welcher mit einer einzigen Hand greifbar ist und über den eine Drehung der Kombination aus erstem Stab (12; 156) und zweitem Stab (14) durchführbar ist, dass an dem zweiten Stab (14) eine Betätigungseinrichtung (164) angeordnet ist, welche auf den ersten Stab (12; 156) wirkt und welche ein Betätigungselement (70) umfasst, wobei durch Betätigung des Betätigungselements (70) eine Verschiebung des ersten Stabs (12; 156) in einer ersten Verschiebungsrichtung (18) antreibbar ist, und wobei die erste Verschiebungsrichtung (18) eine Abstandsvergrößerungsrichtung zwischen dem ersten Anlageelement (26) und dem zweiten Anlageelement (46) ist, dass die Betätigungseinrichtung (164) eine Sperreinrichtung (114; 184) aufweist, welche eine Verschiebung des ersten Stabs (12; 156) zu dem zweiten Stab (14) in einer zweiten Verschiebungsrichtung (20), welche entgegengesetzt zu der ersten Verschiebungsrichtung (18) ist, sperrt, zumindest wenn kein aktiver Löseeingriff an der Sperreinrichtung (114; 184) erfolgt, und dass das Betätigungselement (70) so in Relation zu dem Handgriff (62; 62') angeordnet ist, dass bei Halten der Stütze an dem Handgriff (62; 62') mit einer Haltehand das Betätigungselement (70) über einen oder mehrere Finger dieser Haltehand betätigbar ist.

2. Stütze nach Anspruch 1, **dadurch gekennzeichnet, dass** das Betätigungselement (70) ein Hebelelement (86) ist oder umfasst oder an ein Hebelelement (86) gekoppelt ist, welches um eine Schwenkachse (74) schwenkbar an dem zweiten Stab (14) angeordnet ist,
und insbesondere, dass die Schwenkachse (74) quer und insbesondere senkrecht zu der ersten Verschiebungsrichtung (18) orientiert ist,
und insbesondere, dass das Betätigungselement (70) und/oder das Hebelelement (86) an einem Halter (66; 66') angeordnet ist, welcher an dem zweiten Stab (14) fixiert ist,
und insbesondere, dass an einer Außenseite des Halters (66; 66') ein Schwenklager (72) angeordnet ist, an welchem das Betätigungselement (70) und/oder das Hebelelement (86) schwenkbar gelagert ist,
und insbesondere, dass der Halter (66; 66') als Hülse ausgebildet ist,
und insbesondere, dass der Halter (66; 66') eine durchgehende Ausnehmung (68) aufweist, durch welche der erste Stab (12; 156) durchgetaucht ist,
und insbesondere, dass der Halter (66; 66') an einem Handgriff (62; 62') angeordnet ist, welcher an dem zweiten Stab (14) positioniert ist und insbesondere mit dem Handgriff (62; 62') verbunden ist und insbesondere der Halter (66; 66') und der Handgriff (62; 62') einstückig verbunden sind.

3. Stütze nach einem der vorangehenden Ansprüche, **dadurch gekennzeichnet, dass** der Handgriff (62; 62') als Hülse ausgebildet ist, welche am zweiten Stab (14) sitzt und insbesondere den zweiten Stab (14) umgibt,
und insbesondere, dass das Betätigungselement (70) eine Fingeranlage-Mulde (84) aufweist.

4. Stütze nach Anspruch 2 oder 3, **dadurch gekennzeichnet, dass** die Betätigungseinrichtung (164) mindestens ein Schubelement (96) aufweist, welches auf den ersten Stab (12; 156) wirkt, wobei das Hebelelement (86) auf das mindestens eine Schubelement (96) wirkt,
und insbesondere, dass das mindestens eine Schubelement (96) eine Grundstellung (104) oder einen Grundstellungsbereich bezüglich des ersten Stabs (12; 156) aufweist, in welcher oder welchem der erste Stab (12; 156) verschieblich bezüglich des mindestens einen Schubelements (96) und des zweiten Stabs (14) ist.

5. Stütze nach Anspruch 4, **dadurch gekennzeichnet, dass** das mindestens eine Schubelement (96) eine Vorschubstellung (108) oder einen Vorschubstellungsbereich aufweist, in welcher oder welchem das mindestens eine Schubelement (96) mit dem ersten Stab (12; 156) verklemmt ist, wobei das mindestens eine Schubelement (96) durch eine Schwenkbewegung des Hebelelements (86) in einer ersten Schwenkrichtung (80) aus der Grundstellung (104) oder dem Grundstellungsbereich in die Vorschubstellung (108) oder den Vorschubstellungsbereich bringbar ist,
und insbesondere, dass die Betätigungseinrichtung (164) so ausgebildet ist, dass ausgehend von der Vorschubstellung (108) oder dem Vorschubstellungsbereich des mindestens einen Schubelements (96) eine weitere Schwenkung des Hebelelements (86) in der ersten Schwenkrichtung (80) das mindestens eine Schubelement (96) und aufgrund der Verklemmung den ersten Stab (12; 156) relativ zu dem zweiten Stab (14) translatorisch in der ersten Verschiebungsrichtung (18) bewegt,
und insbesondere, dass das mindestens eine Schubelement (96) federbeaufschlagt ist, wobei eine entsprechende Federeinrichtung (95) so angeordnet und ausgebildet ist, dass sie bestrebt ist, das mindestens eine Schubelement (96) von der Vorschubstellung (108) oder dem Vorschubstellungsbereich in die Grundstellung (104) oder den Grundstellungsbereich zu bringen,
und insbesondere, dass das Hebelelement (86) und/oder das Betätigungselement (70) federbeaufschlagt ist, wobei eine entsprechende Federeinrichtung (116) so angeordnet und ausgebildet ist, dass sie bestrebt ist, das Hebelelement (86) und/oder das Betätigungselement (70) in einer zweiten Schwenkrichtung (82) entgegen der ersten Schwenkrichtung (80) zu bewegen,
und insbesondere, dass bei einer Schwenkung des Hebelelements (86) in der ersten Schwenkrichtung (80) das Betätigungselement (70) auf den zweiten Stab (14) zu bewegt ist, wobei insbesondere das Hebelelement (86) an dem Betätigungselement (70) gebildet ist,
und insbesondere, dass das mindestens eine Schubelement (96) plattenförmig ausgebildet ist mit einer Mittelebene (98), wobei in der Vorschubstellung (108) oder dem Vorschubstellungsbereich die Mittelebene (98) in einem ersten spitzen Winkel (110) zu einer senkrechten Ebene (106) zu der ersten Verschiebungsrichtung (18) orientiert ist und in der Grundstellung (104) oder in dem Grundstellungsbereich mindestens näherungsweise parallel zu dieser senkrechten Ebene (106) oder in einem zweiten spitzen Winkel (105), welcher kleiner ist als der erste spitze Winkel (110), orientiert ist.

6. Stütze nach Anspruch 4 oder 5, **dadurch gekennzeichnet, dass** das mindestens eine Schubelement (96) eine Ausnehmung (100) aufweist, durch welche der erste Stab (12; 156) durchgetaucht ist.

7. Stütze nach einem der vorangehenden Ansprüche, **dadurch gekennzeichnet, dass** die Sperreinrichtung (114; 184) lösbar und insbesondere manuell lösbar ist, wobei ohne Lösung eine Verschiebung des ersten Stabs (12; 156) relativ zu dem zweiten Stab (14) in der zweiten Verschiebungsrichtung (20) gesperrt ist und bei Lösung einer Verschiebung des ersten Stabs (12) in der zweiten Verschiebungsrichtung (20) freigegeben ist.

8. Stütze nach Anspruch 7, **dadurch gekennzeichnet, dass** die Sperreinrichtung (114) mindestens ein Sperrelement (118; 172) aufweist, welches mit dem ersten Stab (12; 156) verklemmbar oder verrastbar ist,
und insbesondere, dass das mindestens eine Sperrelement (118) schwenkbar relativ zu dem ersten Stab (12; 156) angeordnet ist, wobei abhängig von einer Schwenkstellung das mindestens eine Sperrelement (118) in einer Klemmstellung oder Raststellung an dem ersten Stab (12; 156) ist oder der erste Stab (12; 156) freigegeben ist,
und insbesondere, dass bei einer Verschiebungsbewegung des ersten Stabs (12; 156) in der ersten Verschiebungsrichtung (18) mittels des Betätigungselements (70) das mindestens eine Sperrelement (118) durch die Verschiebung des ersten Stabs (12; 156) aus einer Klemmstellung oder Raststellung in eine Freigabestellung gebracht wird,
und insbesondere, dass in einer Klemmstellung oder in einem Klemmstellungsbereich das mindestens eine Sperrelement (118) bezogen auf eine Mittelebene (122) in einem spitzen Winkel (130) zu einer senkrechten Ebene (106) zu der ersten Verschiebungsrichtung (18) liegt, wobei dieser spitze Winkel (130) ein umgekehrtes Vorzeichen im Vergleich zu einem spitzen Winkel (110) eines Schubelements (96) zum Antreiben einer Bewegung in der ersten Verschiebungsrichtung (18) aufweist, wenn dieses Schubelement (96) in einer Klemmstellung an dem ersten Stab (12; 156) ist,
und insbesondere, dass das mindestens eine Sperrelement (118) plattenförmig ausgebildet ist,
und insbesondere, dass das mindestens eine Sperrelement (118) eine Ausnehmung (134) aufweist, durch welche der erste Stab (12; 156) durchgetaucht ist,
und insbesondere, dass ein Sperrelementpaket (120) aus einer Mehrzahl von Sperrelementen (118) vorgesehen ist,
und insbesondere, dass das mindestens eine Sperrelement (118; 172) federbeaufschlagt ist, wobei eine entsprechende Federeinrichtung (132; 174) so angeordnet und ausgebildet ist, dass sie bestrebt ist, das mindestens eine Sperrelement (118; 172) in seine Sperrstellung zu bringen.

9. Stütze nach Anspruch 8, **dadurch gekennzeichnet, dass** ein Lösegriff (140) vorgesehen ist, welcher auf das mindestens eine Sperrelement (118) wirkt, wobei insbesondere der Lösegriff (140) an dem mindestens einen Sperrelement (118) angeordnet ist und insbesondere der Lösegriff (140) als Löseschalter ausgebildet ist,
und insbesondere, dass der Lösegriff (140) so positioniert ist, dass er mit einer Einhandbedienung betätigbar ist, wenn die Stütze mit einer entsprechenden Hand gehalten ist,
und insbesondere, dass der Lösegriff (140) an einer Seite angeordnet ist, welche einer Seite abgewandt ist, an welcher das Betätigungselement (70) angeordnet ist,
und insbesondere, dass der Lösegriff (140) zwischen einem Schubelement (96) der Betätigungseinrichtung (144) und dem zweiten Anlageelement (46) angeordnet ist,
und insbesondere, dass der Lösegriff (150) zwischen einem Schubelement (96) der Betätigungseinrichtung (164) und dem ersten Anlageelement (26) angeordnet ist.

10. Stütze nach einem der vorangehenden Ansprüche, **dadurch gekennzeichnet, dass** der zweite Stab (14) einen Eintauchbereich (22) für den ersten Stab (12; 156) umfasst, und insbesondere ist der erste Stab (12; 156) in dem Eintauchbereich (22) geführt,
und insbesondere, dass in dem Eintauchbereich (22) an einem Ende, welches dem zweiten Anlageelement (46) zugewandt ist, ein Dämpfer und insbesondere eine elastische Anschlageinrichtung (152) für den ersten Stab (12; 156) angeordnet ist.

11. Stütze nach einem der vorangehenden Ansprüche, **dadurch gekennzeichnet, dass** der erste Stab (156) mit Ausnehmungen (158) versehen ist und dass die Betätigungseinrichtung (164) mindestens ein Eingreifelement (160; 166) aufweist, welches in eine Ausnehmung (158) eintauchbar ist.

12. Stütze nach Anspruch 11, **dadurch gekennzeichnet, dass** das mindestens eine Eingreifelement (160; 166) an einem Halter (66; 66') für das Betätigungselement (70) angeordnet ist.

13. Stütze nach Anspruch 11 oder 12, **dadurch gekennzeichnet, dass** die Betätigungseinrichtung (164; 166) einen Schalter (162; 178) aufweist, welcher auf das mindestens eine Eingreifelement (160; 166) wirkt und über den das mindestens eine Eingreifelement (160; 166) in eine Ausnehmung (158) eintauchbar ist und austauchbar ist.

14. Stütze nach Anspruch 13, **dadurch gekennzeichnet, dass** der Schalter (162; 178) so angeordnet ist, dass er mit der Hand bedienbar ist, welche die Stütze hält und insbesondere mit welcher bei Halten der Stütze das Betätigungselement (70) bedienbar ist.

15. Stütze nach einem der vorangehenden Ansprüche, **dadurch gekennzeichnet, dass** der erste Stab (12; 156) an dem zweiten Stab (14) drehfest angeordnet ist.

## Claims

1. Support, comprising a first bar (12; 156), a first abutment element (26) which is held on the first bar (12; 156) by means of a first thread (32) with a first thread direction, a second bar (14), a second abutment element (46) which is held on the second bar (14) by means of a second thread (48) with a second thread direction, the first thread direction being opposite to the second thread direction, and a guiding device (16) by which the first bar (12; 156) is displaceably guided on the second bar (14), wherein a handle (62; 62') which can be gripped with a single hand and by means of which the combination of first bar (12; 156) and second bar (14) can be rotated is arranged on the second bar (14), in that an actuating device (164) which acts on the first bar (12; 156) and which comprises an actuating element (70) is arranged on the second bar (14), it being possible for a displacement of the first bar (12; 156) in a first direction of displacement (18) to be initiated by actuation of the actuating element (70), and the first direction of displacement (18) being a direction of increase in distance between the first abutment element (26) and the second abutment element (46), in that the actuating device (164) comprises a blocking device (114; 184) which blocks a displacement of the first bar (12; 156) in relation to the second bar (14) in a second direction of displacement (20), which is opposite to the first direction of displacement (18), at least when no active releasing action occurs at the blocking device (114; 184), and in that the actuating element (70) is arranged in relation to the handle (62; 62') such that when holding the support at the handle (62, 62') with a holding hand, the actuating element (70) is actuatable with one or more fingers of this holding hand.

2. Support in accordance with claim 1, **characterized in that** the actuating element (70) is or comprises a lever element (86) or is coupled to a lever element (86) which is arranged on the second bar (14) for pivotal movement about a pivot axis (74),
and in particular **in that** the pivot axis (74) is orientated transversely and, in particular, perpendicularly to the first direction of displacement (18),
and in particular **in that** the actuating element (70) and/or the lever element (86) is arranged on a holder (66; 66') which is fixed to the second bar (14),
and in particular **in that** a pivot bearing (72) on which the actuating element (70) and/or the lever element (86) is mounted for pivotal movement is arranged on an outer side of the holder (66; 66'),
and in particular **in that** the holder (66; 66') is constructed as sleeve,
and in particular **in that** the holder (66; 66') has a through-opening (68) through which the first bar (12; 156) passes,
and in particular **in that** the holder (66; 66') is arranged on a handle (62, 62') positioned on the second bar (14) and, in particular, is connected to the handle (62; 62'), and, in particular, the holder (66; 66') and the handle (62; 62') are connected in one piece.

3. Support in accordance with any one of the preceding claims, **characterized in that** the handle (62, 62') is constructed as sleeve which is seated on the second bar (14) and, in particular, surrounds the second bar (14),
and in particular **in that** the actuating element (70) comprises a finger placement hollow (84).

4. Support in accordance with claim 2 or 3, **characterized in that** the actuating device (164) comprises at least one push element (96) which acts on the first bar (12; 156), and the lever element (86) acts on the at least one push element (96),
and in particular **in that** the at least one push element (96) has an initial position (104) or an initial position range in relation to the first bar (12; 56) in which the first bar (12; 156) is displaceable in relation to the at least one push element (96) and the second bar (14).

5. Support in accordance with claim 4, **characterized in that** the at least one push element (96) has an advanced position (108) or an advanced position range in which the at least one push element (96) is clamped to the first bar (12; 156), it being possible for the at least one push element (96) to be brought from the initial position (104) or the initial position range into the advanced position (108) or the advanced position range by a pivotal movement of the lever element (86) in a first pivotal direction (80),
and in particular **in that** the actuating device (164) is constructed such that starting from the advanced position (108) or the advanced position range of the at least one push element (96), a further pivoting of the lever element (86) in the first pivotal direction (80) moves the at least one push element (96) and, owing to the clamping, the first bar (12; 156) relative to the second bar (14) in a translatory manner in the first direction of displacement (18),
and in particular **in that** the at least one push element (96) is spring-loaded, with a corresponding spring device (95) being arranged and constructed such that it endeavors to bring the at least one push element (96) from the advanced position (108) or the advanced position range into the initial position (104) or the initial position range,
and in particular **in that** the lever element (86) and/or the actuating element (70) is spring-loaded, with a corresponding spring device (116) being arranged and constructed such that it endeavors to move the lever element (86) and/or the actuating element (70) in a second pivotal direction (82) opposite to the first pivotal direction (80),
and in particular **in that** when pivoting the lever element (86) in the first pivotal direction (80), the actuating element (70) is moved towards the second bar (14), and, in particular, the lever element (86) is formed on the actuating element (70),
and in particular **in that** the at least one push element (96) is of plate-shaped construction with a center plane (98), and in the advanced position (108) or the advanced position range the center plane (98) is orientated at a first acute angle (110) to a perpendicular plane (106) to the first direction of displacement (18), and in the initial position (104) or in the initial position range is orientated at least approximately parallel to this perpendicular plane (106) or at a second acute angle (105), which is smaller than the first acute angle (110).

6. Support in accordance with claim 4 or 5, **characterized in that** the at least one push element (96) has a through-opening (100) through which the first bar (12; 156) passes.

7. Support in accordance with any one of the preceding claims, **characterized in that** the blocking device (114; 184) is releasable and, in particular, manually releasable, and, without release, a displacement of the first bar (12; 156) relative to the second bar (14) in the second direction of displacement (20) is blocked, and, with release, a displacement of the first bar (12) in the second direction of displacement (20) is unblocked.

8. Support in accordance with claim 7, **characterized in that** the blocking device (114) comprises at least one blocking element (118; 172) which is clampable or latchable to the first bar (12; 156),
and in particular **in that** the at least one blocking element (118) is arranged for pivotal movement relative to the first bar (12; 156), and, in dependence upon a pivotal position, the at least one blocking element (118) is in a clamped position or latched position on the first bar (12; 156) or the first bar (12; 156) is released,
and in particular **in that** upon a displacement movement of the first bar (12; 156) in the first direction of displacement (18) by means of the actuating element (70), the at least one blocking element (118) is brought out of a clamped position or latched position into a released position by the displacement of the first bar (12; 156),
and in particular **in that** in a clamped position or in a clamped position range, the at least one blocking element (118) lies in relation to a center plane (122) at an acute angle (130) to a perpendicular plane (106) to the first direction of displacement (18), this acute angle (130) having an opposite sign in comparison with an acute angle (110) of a push element (96) for initiating a movement in the first direction of displacement (18) when this push element (96) is in a clamped position on the first bar (12; 156),
and in particular **in that** the at least one blocking element (118) is of plate-shaped construction,
and in particular **in that** the at least one blocking element (118) has a through-opening (134) through which the first bar (12; 156) passes,
and in particular **in that** a blocking element stack (120) consisting of a plurality of blocking elements (118) is provided,
and in particular **in that** the at least one blocking element (118; 172) is spring-loaded, with a corresponding spring device (132; 174) being arranged and constructed such that it endeavors to bring the at least one blocking element (118; 172) into its blocked position.

9. Support in accordance with claim 8, **characterized in that** a release grip (140) which acts on the at least one blocking element (118) is provided, the release grip (140) being, in particular, arranged on the at least one blocking element (118), and the release grip (140) being, in particular, constructed as release switch,
and in particular **in that** the release grip (140) is positioned such that it is actuatable with one-hand operation when the support is held with a corresponding hand,
and in particular **in that** the release grip (140) is arranged on a side that faces away from a side on which the actuating element (70) is arranged,
and in particular **in that** the release grip (140) is arranged between a push element (96) of the actuating device (144) and the second abutment element (46),
and in particular **in that** the release grip (150) is arranged between a push element (96) of the actuating device (164) and the first abutment element (26).

10. Support in accordance with any one of the preceding claims, **characterized in that** the second bar (14) has a plunge-in area (22) for the first bar (12; 156), and, in particular, the first bar (12; 156) is guided in the plunge-in area (22),
and in particular **in that** a damper and, in particular, an elastic stop device (152) for the first bar (12; 156) is arranged in the plunge-in area (22) at an end facing the second abutment element (46).

11. Support in accordance with any one of the preceding claims, **characterized in that** the first bar (156) is provided with recesses (158), and **in that** the actuating device (164) comprises at least one engagement element (160; 166) which is insertable into a recess (158).

12. Support in accordance with claim 11, **characterized in that** the at least one engagement element (160; 166) is arranged on a holder (66; 66') for the actuating element (70).

13. Support in accordance with claim 11 or 12, **characterized in that** the actuating device (164; 166) comprises a switch (162; 178) which acts on the at least one engagement element (160; 166) and by means of which the at least one engagement element (160; 166) is insertable into and withdrawable from a recess (158).

14. Support in accordance with claim 13, **characterized in that** the switch (162; 178) is arranged so as to be operable with that hand which holds the support and, in particular, with which the actuating element (70) is operable when holding the support.

15. Support in accordance with any one of the preceding claims, **characterized in that** the first bar (12; 156) is arranged in a rotationally fixed manner on the second bar (14).

## Revendications

1. Etançon comprenant une première barre (12 ; 156), un premier élément d'appui (26), lequel est maintenu sur la première barre (12 ; 156) par l'intermédiaire d'un premier filetage (32) avec un premier sens de filetage, une deuxième barre (14), un deuxième élément d'appui (46), lequel est maintenu sur la deuxième barre (14) par l'intermédiaire d'un deuxième filetage (48) avec un deuxième sens de filetage, dans lequel le premier sens de filetage est opposé au deuxième sens de filetage, et un système de guidage (16), par lequel la première barre (12 ; 156) est guidée de manière à pouvoir coulisser sur la deuxième barre (14), dans lequel
est disposée sur la deuxième barre (14) une poignée (62 ; 62'), laquelle peut être saisie d'une seule main et par l'intermédiaire de laquelle une rotation de la combinaison composée d'une première barre (12 ; 156) et d'une deuxième barre (14) peut être mise en oeuvre, qu'est disposé sur la deuxième barre (14) un système d'actionnement (164), lequel agit sur la première barre (12 ; 156) et lequel comprend un élément d'actionnement (70), dans lequel un coulissement de la première barre (12 ; 156) dans une première direction de coulissement (18) peut être entraîné par l'actionnement de l'élément d'actionnement (70), et dans lequel la première direction de coulissement (18) est une direction d'agrandissement de distance entre le premier élément d'appui (26) et le deuxième élément d'appui (46), que le système d'actionnement (164) présente un système de blocage (114 ; 184), lequel bloque un coulissement de la première barre (12 ; 156) vers la deuxième barre (14) dans une deuxième direction de coulissement (20), laquelle est opposée à la première direction de coulissement (18), au moins lorsqu'aucune prise de desserrage active sur le système de blocage (114 ; 184) n'est effectuée, et que l'élément d'actionnement (70) est disposé de telle sorte par rapport à la poignée (62 ; 62') que lors du maintien de l'étançon sur la poignée (62 ; 62') avec une main de maintien, l'élément d'actionnement (70) peut être actionné par l'intermédiaire d'un ou de plusieurs doigts de ladite main de maintien.

2. Etançon selon la revendication 1, **caractérisé en ce que** l'élément d'actionnement (70) est ou comprend un élément de levier (86) ou est couplé à un élément de levier (86), lequel est disposé sur la deuxième barre (14) de manière à pouvoir pivoter autour d'un axe de pivotement (74),
et en particulier que l'axe de pivotement (74) est orienté de manière transversale et en particulier de manière perpendiculaire par rapport à la première direction de coulissement (18),
et en particulier que l'élément d'actionnement (70) et/ou l'élément de levier (86) sont disposés sur un système de maintien (66 ; 66'), lequel est fixé sur la deuxième barre (14) ;
et en particulier qu'est disposé sur un côté extérieur du système de maintien (66 ; 66') un palier de pivotement (72), sur lequel l'élément d'actionnement (70) et/ou l'élément de levier (86) sont montés de manière à pouvoir pivoter,
et en particulier que le système de maintien (66 ; 66') est réalisé en tant qu'un manchon,
et en particulier que le système de maintien (66 ; 66') présente un évidement continu (68), par lequel la première barre (12 ; 156) est enfoncée totalement,
et en particulier que le système de maintien (66 ; 66') est disposé sur une poignée (62 ; 62'), laquelle est positionnée sur la deuxième barre (14) et est reliée en particulier à la poignée (62 ; 62') et en particulier le système de maintien (66 ; 66') et la poignée (62 ; 62') sont reliés d'un seul tenant.

3. Etançon selon l'une quelconque des revendications précédentes, **caractérisé en ce que** la poignée (62 ; 62') est réalisée en tant qu'un manchon, lequel siège sur la deuxième barre (14) et entoure en particulier la deuxième barre (14),
et en particulier que l'élément d'actionnement (70) présente une cavité d'appui pour doigt (84).

4. Etançon selon la revendication 2 ou 3, **caractérisé en ce que** le système d'actionnement (164) présente au moins un élément de poussée (96), lequel agit sur la première barre (12 ; 156), dans lequel l'élément de levier (86) agit sur l'au moins un élément de poussée (96),
et en particulier que l'au moins un élément de poussée (96) présente une position de base (104) ou une zone de position de base par rapport à la première barre (12 ; 156), dans laquelle la première barre (12 ; 156) peut coulisser par rapport à l'au moins un élément de poussée (96) et à la deuxième barre (14).

5. Etançon selon la revendication 4, **caractérisé en ce que** l'au moins un élément de poussée (96) présente une position d'avancement (108) ou une zone de position d'avancement, dans laquelle l'au moins un élément de poussée (96) est serré avec la première barre (12 ; 156), dans lequel l'au moins un élément de poussée (96) peut être amené par un déplacement par pivotement de l'élément de levier (86) dans une première direction de pivotement (80) depuis la position de base (104) ou la zone de position de base dans la position d'avancement (108) ou la zone de position d'avancement,
et en particulier que le système d'actionnement (164) est réalisé de telle sorte qu'en partant de la position d'avancement (108) ou de la zone de position d'avancement de l'au moins un élément de poussée (96), un autre pivotement de l'élément de levier (86) dans la première direction de pivotement (80) déplace par translation dans la première direction de coulissement (18) l'au moins un élément de poussée (96) et, du fait du serrage, la première barre (12 ; 156) par rapport à la deuxième barre (14),
et en particulier que l'au moins un élément de poussée (96) est soumis à l'action d'un ressort, dans lequel un système de ressort (95) correspondant est disposé et est réalisé de telle sorte qu'il s'efforce d'amener l'au moins un élément de poussée (96) depuis la position d'avancement (108) ou la zone de position d'avancement dans la position de base (104) ou dans la zone de position de base,
et en particulier que l'élément de levier (86) et/ou l'élément d'actionnement (70) sont soumis à l'action d'un ressort, dans lequel un système de ressort (116) correspondant est disposé et réalisé de telle sorte qu'il s'efforce de déplacer l'élément de levier (86) et/ou l'élément d'actionnement (70) dans une deuxième direction de pivotement (82) à l'opposé de la première direction de pivotement (80),
et en particulier que lors d'un pivotement de l'élément de levier (86) dans la première direction de pivotement (80), l'élément d'actionnement (70) est à déplacer sur la deuxième barre (14), dans lequel en particulier l'élément de levier (86) est formé sur l'élément d'actionnement (70),
et en particulier que l'au moins un élément de poussée (96) est réalisé en forme de panneau avec un plan central (98), dans lequel dans la position d'avancement (108) ou la zone de position d'avancement, le plan central (98) est orienté selon un premier angle aigu (110) par rapport à un plan perpendiculaire (106) par rapport à la première direction de coulissement (18) et dans la position de base (104) ou dans la zone de position de base, il est orienté au moins approximativement de manière parallèle audit plan perpendiculaire (106) ou selon un deuxième angle aigu (105), lequel est inférieur au premier angle aigu (110).

6. Etançon selon la revendication 4 ou 5, **caractérisé en ce que** l'au moins un élément de poussée (96) présente un évidement (100), par lequel la première barre (12 ; 156) est totalement enfoncée.

7. Etançon selon l'une quelconque des revendications précédentes, **caractérisé en ce que** le système de blocage (114 ; 184) peut être desserré et en particulier peut être desserré manuellement, dans lequel sans desserrage, un coulissement de la première barre (12 ; 156) par rapport à la deuxième barre (14) est bloqué dans la deuxième direction de coulissement (20), et est débloqué lors du desserrage d'un coulissement de la première barre (2) dans la deuxième direction de coulissement (20).

8. Etançon selon la revendication 7, **caractérisé en ce que** le système de blocage (114) présente au moins un élément de blocage (118 ; 172), lequel peut être serré ou enclenché à la première barre (12 ; 156),
et en particulier que l'au moins un élément de blocage (118) est disposé de manière à pouvoir pivoter par rapport à la première barre (12 ; 156), dans lequel en fonction d'une position de pivotement, l'au moins un élément de blocage (118) est sur la première barre (12 ; 156) dans une position de serrage ou une position d'enclenchement ou la première barre (12 ; 156) est débloquée,
et en particulier que lors d'un déplacement par coulissement de la première barre (12 ; 156) dans la première direction de coulissement (18) au moyen de l'élément d'actionnement (70), l'au moins un élément de blocage (118) est amené par le coulissement de la première barre (12 ; 156) depuis une position de serrage ou une position d'enclenchement dans une position de déblocage,
et en particulier que dans une position de serrage ou une zone de position de serrage, l'au moins un élément de blocage (118) se situe par rapport à un plan central (122) selon un angle aigu (130) par rapport à un plan perpendiculaire (106) par rapport à la première direction de coulissement (18), dans lequel ledit angle aigu (130) présente un signe inverse en comparaison avec un angle aigu (110) d'un élément de poussée (96) pour entraîner un déplacement dans la première direction de coulissement (18) lorsque ledit élément de poussée (96) est dans une position de serrage sur la première barre (12 ; 156), et
en particulier que l'au moins un élément de blocage (118) est réalisé en forme de panneau,
et en particulier que l'au moins un élément de blocage (118) présente un évidement (134), par lequel la première barre (12 ; 156) est totalement enfoncée,
et en particulier qu'un paquet d'éléments de blocage (120) composé d'une pluralité d'éléments de blocage (118) est prévu,
et en particulier que l'au moins un élément de blocage (118 ; 172) est soumis à l'action d'un ressort, dans lequel un système de ressort (132 ; 174) correspondant est disposé et est réalisé de telle sorte qu'il s'efforce d'amener l'au moins un élément de blocage (118 ; 172) dans sa position de blocage.

9. Etançon selon la revendication 8, **caractérisé en ce qu'**une prise de desserrage (140) est prévue, laquelle agit sur l'au moins un élément de blocage (118), dans lequel en particulier la prise de desserrage (140) est disposée sur l'au moins un élément de blocage (118) et en particulier la prise de desserrage (140) est réalisée en tant que commutateur de desserrage,
et en particulier que la prise de desserrage (140) est positionnée de telle sorte qu'elle peut être actionnée avec une utilisation à une seule main lorsque l'étançon est maintenu d'une main correspondante,
et en particulier que la prise de desserrage (140) est disposée sur un côté, lequel est opposé au côté, sur lequel est disposé l'élément d'actionnement (70),
et en particulier que la prise de desserrage (140) est disposée entre un élément de poussée (96) du dispositif d'actionnement (144) et le deuxième élément d'appui (46),
et en particulier que la prise de desserrage (150) est disposée entre un élément de poussée (96) du système d'actionnement (164) et le premier élément d'appui (26).

10. Etançon selon l'une quelconque des revendications précédentes, **caractérisé en ce que** la deuxième barre (14) comprend une zone d'enfoncement (22) pour la première barre (12 ; 156), et en particulier la première barre (12 ; 156) est guidée dans la zone d'enfoncement (22),
et en particulier que dans la zone d'enfoncement (22), un amortisseur et en particulier u système de butée (152) élastique sont disposés pour la première barre (12 ; 156) sur une extrémité, laquelle est tournée vers le deuxième élément d'appui (46).

11. Etançon selon l'une quelconque des revendications précédentes, **caractérisé en ce que** la première barre (156) est pourvue d'évidements (158), et que le système d'actionnement (164) présente au moins un élément de prise (160 ; 166), lequel peut être enfoncé dans un évidement (158).

12. Etançon selon la revendication 11, **caractérisé en ce que** l'au moins un élément de prise (160 ; 166) est disposé sur un système de maintien (66 ; 66') pour l'élément d'actionnement (70).

13. Etançon selon la revendication 11 ou 12, **caractérisé en ce que** le système d'actionnement (164 ; 166) présente un commutateur (162 ; 168), lequel agit sur l'au moins un élément de prise (160 ; 166) et peut être enfoncé dans un évidement (158) par l'intermédiaire de l'au moins un élément de prise (160 ; 166) et peut être remplacé.

14. Etançon selon la revendication 13, **caractérisé en ce que** le commutateur (162 ; 178) est disposé de telle sorte qu'il peut être utilisé avec la main, laquelle maintient l'étançon et en particulier avec laquelle lors du maintien de l'étançon, l'élément d'actionnement (70) peut être utilisé.

15. Etançon selon l'une quelconque des revendications précédentes, **caractérisé en ce que** la première barre (12 ; 156) est disposée de manière solidaire en rotation sur la deuxième barre (14).
